# EUROPEAN PATENT SPECIFICATION

(11) **EP 4 470 368 B1**
(45) Date of publication and mention of the grant of the patent: **17.09.2025**
(21) Application number: 23176219.6
(22) Date of filing: 30.05.2023
(51) Int. Cl.: A01K 11/00

(54) **AUTONOMOUS LIVESTOCK MONITORING**
AUTONOME VIEHÜBERWACHUNG
SURVEILLANCE AUTONOME DE BÉTAIL

(43) Date of publication of application: 04.12.2024
(73) Proprietor: Cattle Eye Ltd, Belfast, Antrim BT9 5JL (GB)
(72) Inventor: Canning, Terry, Antrim, BT9 5JL (GB); Askew, Adam, Antrim, BT66 7JA (GB); Thompson, Ian, Belfast, BT6 0JN (GB); Lennox, Mark, Magherafelt, BT45 6LE (GB)
(74) Representative: Murgitroyd & Company

(56) References cited:
- EP-A1- 3 342 280
- WO-A1-2017/031532
- GB-A- 2 591 345

## Description

### Field

The present invention relates to a method and system for autonomous livestock monitoring. More specifically, the present invention provides a method and system for determining the identity of individual animals in a population of animals.

### Background of the Invention

Video analytics technology has seen rapid advances in recent years. Complex machine learning methodologies and algorithms are now becoming readily available. In addition, video capture technology has become ubiquitous with both stationary cameras and camera-equipped drones increasing in sophistication and decreasing in cost.

The availability of this technology has created an opportunity in the farming industry to harness the benefits of video analytics to improve animal monitoring and enable higher animal welfare standards. Higher animal welfare standards increase farm efficiency, avoid animal suffering, and address a consumer demand for confidence that the animals supplying their protein have experienced high welfare standards.

An important part of animals monitoring is identification of individual animals. Some existing animal monitoring systems identify animals using sensor technology that relies on manual intervention e.g. adding RFID tags. Such technology is by its nature non-scalable, and prone to inconsistency and inaccuracy. For example, sensors such as radio frequency identification, RFID, tags may become detached from an animal and/or become broken resulting in an animal not being identifiable by RFID systems. Even when RFID sensors are operating as intended, the success rate of RFID based identification is not 100 percent.

Other animal monitoring solutions rely on images obtained from specialised 3D cameras. Such specialised cameras are difficult to configure, maintain, and update - often complex configuration and calibration procedures are required to ensure the specialised cameras are functioning correctly.

Other animal systems that employ imagining sensors and sensors such as radio frequency identification, RFID, suffer from timing issues in that these systems may be out of synch with one another due to day light savings or computing device time differences and as a result are out of synch.

Consequently, known animal monitoring solutions often have problems such as being difficult to expand or update; inaccurate or unreliable; restricted in operative range; have timing related issues and challenging to operate outdoors, in inclement or adverse conditions, or in poorly illuminated spaces.

Therefore, there is a need to provide a cost effective and efficient solution for monitoring animals that overcomes the drawbacks of existing solutions.

WO2017031532 A1 discloses an integrated supply chain traceability and animal welfare surveillance system. It discloses a method and system for identifying an individual animal from a plurality of animals comprising an identification module, an animal recording module, a two-dimensional imaging sensor for obtaining in a time window data associated with the animals via the recording module and the identification module and matching the animal identified via the recording module and identification module.

EP3342280 A1 discloses a livestock registration system which includes an image data acquisition unit, a signal acquisition unit, and a registration unit.

### Summary

According to the invention there is provided a method according to claim 1 and a system according to claim 11.

The present invention aims to provide a method and a system for identifying an individual animal from a plurality of animals that overcomes the problems of the known solutions.

The invention provides a method and a system that dynamically, autonomously, identifies animals using multiple measurement modalities and continuously learns from the obtained operating data.

An aim of the present invention is to provide a method and a system for identifying an individual animal in a population of animals e.g. cows, pigs, and the like that can be integrated and used in a farm environment, which is a challenging environment for a lot of known identification technology.

The system can be used to bolster existing systems. For example, existing RFID systems do not work perfectly, and the new system can be used to supplement existing RFID when they fail. The system can therefore identify an animal when the existing RFID system fails and provide the identification to downstream systems, such as a parlour management system, preventing delays. The system can also alert the user to animals that fail to be identified by the RFID system. As a result, the user can quickly address whatever problem may exist e.g. replacing or fixing the RFID device such as a tag. The system can also react dynamically to delays between the animals being scanned and appearing under an animal recording module. This removes the need for the RFID reader to be directly beneath or within the vicinity of the animal recording module.

Further, as the identity of each animal can be determined via the autonomous comparison or correlation of an animal identified at an animal recording module during a first time window with an animal identified by an animal identification module, the system is dynamic and self-expanding. For example, even if no set-up data is supplied when animals in a population are monitored, in time the same animal will be scanned again. The system can also recognise an animal from a using its visual layer such as an identification vector with an identification vector formed earlier for the same animal. In due course, all animals can be automatically enrolled and identified. In addition, once matched the animal data can be used for further fine tuning of the algorithm to improve performance in the future. The system can thereby adapt to the changing environmental conditions on farms. The system can then monitor the population, to see if the number of animals change.

An aspect of the present invention relates to a method performed by a system for identifying an individual animal from a plurality of animals, the method comprising the following steps:
a) obtaining, via at least one animal recording module at a first time over a first time window, data associated with the plurality of animals, the data comprising a video from a two-dimensional imaging sensor;
b) obtaining, via animal identification module at a second time over a second time window, data associated with an identifier of each of a subset of the plurality of animals;
   wherein the animal recording module is located at a first location and the animal identification module is located at a second location, wherein the first location is spaced apart from the second location;
   wherein the at least one animal recording module is configured to identify individual animals within the first time window and associate the individual animals with a time stamp corresponding to a point of detection for that animal;
   wherein the at least one animal identification module is configured to identify individual animals within the second time window and associate the individual animals with a time stamp corresponding to a point of detection for that animal;
c) correlating the identified individual animal identified by the at least one animal recording module at the first time window with the animal identified by the at least one animal identification module at the second time window;
d) adjusting the width of the second time window relative to the first time window and/or an offset of the second time window with respect to the first time window;
repeating steps a) to c) with the adjusted width and/or offset of the time window.

Some animal identification systems rely on a pre-determined assignment of a single RFID read to an animal detection. In the real world there are a range of scenarios where this is not possible, for example when an RFID receiver is not in view of a camera. How then are they matched? This is a common scenario on a farm where the exact animal number / identity of an object / cow that passes cannot be confirmed to an individual animal, however it can be narrowed to a collection possibilities. An advantage of the present disclosure is that it provides an arrangement for collecting the visual identification features of the animals as they pass a camera and assign an array of RFID signals. Over time the system is able to compare the visual detections to the list of common RFID signals in the list and eventually deduce and match the correct animal RFID signal to the visually detected animal. Animal instances may be detected and then sorted in the order they appeared in the video footage and synced up with the actual animal IDs e.g. from an RFID tag. For example, an RFID reader may be positioned at a location along a passage that captures the ID information from an RFID tag attached to the body of each animal. The order in which the animal appears on the video footage may be associated with the order in which the ID of each animal was captured by the RFID reader. The time windows are used to sync-up IDs from the animal recording module and the animal identification module, these synced-up IDs may be used as training labels in conjunction with the images extracted of each animal in the video recording to train an ID classification network. For example, once animals have been identified/enrolled, the system can use the data associated with those animals to re-train neural networks to discriminate between animals and adapt to changing conditions on farms. If there are too many reads in the second time window, the system can re-adapt to have a reduced time window to improve the correlation. In this way, the window can be narrowed to reduce the number of potential candidates and therefore the correlation becomes an easier task when comparing or correlating the information or obtained data from the animal recording module and the animal identification module.

The system is configured to repeat steps a) to c) until the system has matched the individual animal identified by the at least one animal recording module at the first time window with the animal identified by the at least one animal identification module at the second time window for at least four times. In this way, a history of reads and vectors is obtained from the animal recording and identification modules before a final assignment of identity of the animal. The history of reads and vectors may require at least four occurrences of a particular animal before the system enrols that identified animal. For example, there may be four animals obtained by the system, say four cows, a reader such as an animal identification module may obtain information such as cows numbered 1, 2, 3, 4 and an animal recording module, such as a camera, may obtain information such as black cow, white cow, black and white cow and brown cow. During a next observation, a reader may obtained cows numbered 2, 3, 4, 5 and so cow number 1 is not detected in this instance and the camera has all cows apart from the black cow, so over two days, the system already has a feel for cow#1 being the black cow. On a next observation, the system obtains the same information, that is, the reader obtains information such as cows numbered 1, 2, 3, 4 and the animal recording module, such as a camera, may obtain information such as black cow, white cow, black and white cow and brown cow. The system is able to determine that the black cow appeared later and cow read #1 also appeared later and then determines cow#1 is the black cow.

According to embodiments of the present disclosure, wherein upon identifying the individual animal identified at the first time window with the animal identified at the second time window for at least four times, enrolling the identified animal within the system. During an enrolling phase, a video recording may be captured for each animal by a 2D camera. During the enrolment phase, detected instances of the animal may be assigned an arbitrary unique identification (ID). The arbitrary unique ID of each enrolled animal is associated with the actual ID of the animal obtained from a separate source e.g. an RFID device such as a tag, marking and the like. As such the detected instances in a video recording for each enrolled animal are associated with the actual ID of the animal. Each video recording may be segmented into a set of individual frames, and an instance of the animal may be detected in each frame. A segmentation mask may be applied to each detected instance of the animal in each frame and accordingly the reference points and their corresponding positions in each frame may be detected. Furthermore, the system matches or correlates the animal both at the animal recording module, at a feature vector level, and the animal identification module, at an identifier such as RFID ID level, before the system enrols that animal. Once the animal is enrolled and the animal doesn't appear at the animal identification module, the system records this identification as an animal identification module failure but still identifies the enrolled animal via the processing and analysis performed at animal recording module. That is, if the animal information is not received at the identification module, the system still identifies the animal via the animal recording module once the animal has been enrolled. For example, once an animal is enrolled or registered in the system, following the four instance of correlation that is, if the animal identification module was to cease operation due to, for example, interruption to that system, the system is configured to still identify the animal based on visual vector information for that animal obtained for those four occurrences even if the animal identification information is not being received or obtained at an animal identification module. In this way, the system is learning which animal is which. Each new animal introduced to the system or each animal that may have had an identification replaced, such as an RFID device in the form of a tag, will be processed until enrolled, that is, the system has processed at least four occurrences of that animal. It will be appreciated that if an animal is unique, such as has unique identifying features, that the animal may be identified sooner than the four instances.

According to embodiments of the present disclosure, wherein correlating the individual animal identified by the at least one animal recording module with the animal identified by the at least one animal identification module is performed at the first and second time windows. In this way, by using time windows, the number of potential candidates can be narrowed and therefore the correlation becomes an easier task when comparing or correlating the information or obtained data from the animal recording module and the animal identification module. This improves the processing and efficiency of the system.

According to embodiments of the present disclosure, the animal identification module has a range of detection and the two-dimensional imaging sensor has a field of view such that the range of detection and the field of view are not coincident. The animal recording module and the animal detection module are two separate independent systems that unite together to enable identification of an individual animal. The individual systems may not be in agreement, for example the clock times for each of these systems may be different or out of sync and the system is configured to compensate for differences between the two systems and combines information from the two separate systems, or modules, to provide an animal identity.

According to embodiments of the present disclosure, the field of view covers a distance of up to 30 metres, preferably up to 10 metres. The field of view required for an animal recording module may be based on the environment in which the system is being deployed. Thus, an animal recording module may have an extended field of view depending on the installation or deployment of the recording module. For example, an animal recording module may be installed on a ceiling of a barn, a suitable animal recording module for observing all animals within the barn area below may be used and therefore an animal recording module having a suitable range which large enough for detecting the animals within its field of view below may be utilized.

According to embodiments of the present disclosure, the first location is spaced apart from the second location by a distance, D, of up to 50 metres, preferably up to 10 metres. A separation distance may be determined based on the installation of the system in the location of the set-up. A smaller distance results in a smaller time window with a smaller number of candidates, or animals that will be correlated. As a result, the efficiency and processing of the system can be improved by adapting the separation distance.

According to embodiments of the present disclosure, the range of detection is up to 5 metres, preferably up to 3 metres, 3m. The range of detection may be based on the system set-up and the range required. The range ensures that an animal unique identifier is obtained or detected as the animal(s) pass by the animal detection module.

According to embodiments of the present disclosure, the width or the offset of the second time window relative to the first time window is up to 20 minutes, preferably up to 5 minutes. The width and/or offset of the second time window is adjustable. The greater the size of a time window, the greater the number of candidates, or animals, pass by the camera(s) and RFID reader(s). As such, the system can be configured to avoid too much variance in the time offsets that would result in RFID time window being too wide with too many candidates. In this way, the time window can be adjusted to improve the correlation and ensures processing efficiency while minimising the number of data/information that needs to be processed by the system.

According to embodiments of the present disclosure, the first and second time windows are set with an initial time window value, wherein the value is based upon a speed or range of speeds of at least one or more of the animals moving between the animal identifier module and the animal recording module. In this way, the system is configured to adjust the time window based on the information being obtained via the animal recording module and the animal identification module. As such, the time windows are based on two systems and the information being obtained by the two systems. By providing the ability to adapt or modify the time window allows the system to be configured to improve processing and efficiency. That is, the time windows can be modified to change the number of candidate or animal information that is being detected or obtained within that time window.

According to embodiments of the present disclosure, the initial time window value is based on user input. In this way, an initial start value is input by a user, such as a farmer who has deployed or installed the system on a farm. This value may be based on the animal recording module and the animal identification module locations, how far they are apart. For example, if it takes an animal takes five seconds to walk from one module to another, the window could be set to +/- 20 seconds.

According to embodiments of the present disclosure, the two-dimensional imaging sensor is a colour camera. In this way, the present invention may be implemented using of the shelf cameras to identify an individual animal from a plurality of animals. For example, a 2D camera operating at 20 frames/second may be used. Therefore, the present solution does not require specialised equipment as it is the case with existing solutions, and thus is cost effective Furthermore, by enabling the utilization of 2D cameras as in the present invention, such as off the shelf 2D cameras, avoids the need for bespoke hardware cameras and configurations such as, for example, 3D imaging systems. The 2D camera may be mounted on a fixed overhead location or may be mounted on a movable object e.g. a drone.

According to embodiments of the present disclosure, the animal identification module comprises a radio frequency identification, RFID, reader. In this way, a unique identifier of an animal is able to be obtained or detected by the system when an animal passes within a detection range of the identification module.

According to embodiments of the present disclosure, wherein the data associated with the identifier of each of the subset of the plurality of animals is information received, at the RFID reader, from an RFID device attached to each of the subset of the plurality of animals. An RFID device may be in the form of an RFID tag for example that is configured to send identification information upon being read by an RFID reader. The identification information provides a unique identifier for the animal to which the RFID device is attached.

According to embodiments of the present disclosure, wherein the two-dimensional imaging sensor has a field of view angle between 30 to 150 degrees, preferably 20 to 160 degrees. The choice of two-dimensional imaging sensor may be chosen depending on the environment in which the system is being set-up and the position of the imaging sensor. The field of view angle is such that live footage can be obtained of the animals passing within the field of view of the imaging sensor so that live video footage can be analysed and processed for identifying an individual animal.

According to a second aspect of the present disclosure, a system for determining an identity of an animal from a plurality of animals is provided comprising:
an animal detection system comprising:
   means for obtaining a video recording of an animal moving through a space, the video recording captured by a two-dimensional imaging device from an overhead angle;
   means for obtaining an identifier of an animal moving through a space, the identifier detected by an animal identification module spaced apart from the two-dimensional imaging device;
a user device communicatively coupled to the animal detection system and configured to receive information associated with the identity of the animal;
wherein the animal detection system comprising:
   at least one processor configured to perform the method according to the first aspect of the invention.

In this way, there is provided a means for identifying an animal in a continuous and autonomous manner that requires little or no human intervention. As a result, the system is able to compare visual detections to a list of common RFID signals and eventually deduce and match correct animal RFID signal to the visually detected animal(s). Furthermore, an alert may be communicate to inform a user that an identification device, such as an RFID tag is gone or has fallen off an animal or be able to inform a user which animal is a particular animal through identification to enable a user to assign a health insight to that animal. As such, an enrolling phase may be provided in which the system is learning which animal is a particular animal, visually identifying the animal that is, and following an enrolment phase, an insight on the health and welfare state of the animal may be provided any time the animal is observed. The system thus saves the costs and time involved in performing such tasks. Furthermore, an alert could be sent to a user device to inform the user that an animal identification such as for example a tag is not associated with an animal identified in the animal recording module but not identified by the animal identification module. The system can also inform or tell a user which one an animal is, that is an animal is identified, so the user can assign or provide a health insight to that identified animal. The system can also alert the user to animals that fail to be identified by the RFID system. As a result, the user can quickly address whatever problem may exist e.g. replacing or fixing the RFID device such as a tag.

According to a third aspect of the present disclosure, a sort gate, rotary parlour or herring bone parlour comprising the system according to the second aspect of the invention. The system of the present invention may be installed at any location for accommodating animals moving from one location to another. For example, the system may be installed or deployed at a sort gate, rotary parlour or herring bone parlour and the like. Such arrangements may have a walkway and/or a passage where the animal pass to move from one area to another area e.g. a walkway that allows a sorting of an animal into groups whilst ensuring no interruption to the animal traffic, or walkway arrangement leading the animals to particular locations for milking the animal. The passages may be dimensioned so as to allow a number of animals to move in a predetermined direction and/or to reside in a particular location. The passages may for example be configured to accommodate animals moving one after another or side by side in a single or multiple lines. The passages may be further separated into multiple sections, each section configured to accommodate a number of animals moving one after another or side by side in a single or multiple line or may have multiple exits and entry points.

According to a fourth aspect of the present invention, an animal farm comprising the system according to the second aspect is provided. The system of the present invention may be installed at any location on the farm. For example, the system may be installed at a walkway and/or a passage where the animal pass to move to another area of the farm e.g. a walkway between the feeding and the milking station. The passage may be dimensioned so as to allow a number of animals to move in a predetermined direction. The passage may for example be configured to accommodate animals moving one after another or side by side in a single or multiple lines. The passage may be further separated into multiple sections, each section configured to accommodate a number of animals moving one after another or side by side in a single or multiple line.

### Brief Description of the Drawings

The present application will now be described with reference to the accompanying drawings in which:
Figure 1 shows a system for determining an identity of an animal;
Figure 2a shows a process for operating the system of figure 1;
Figure 2b shows the process of figure 2a with optional animal flow detection;
Figure 3 shows a process for operating the system of figure 1;
Figure 4 shows an installation of part of the system of figure 1;
Figure 5a shows a segmented image and bounding box of an animal from a frame of a video recording;
Figure 5b shows the segmented image of figure 5a with reference points associated with body parts of the animal;
Figure 5c shows a series of segmented images with reference points;
Figure 6a shows a segmented image and bounding box of an animal with additional reference points associated with body parts of the animal;
Figure 6b shows a series of segmented images with reference points;
Figure 7 shows the key areas of interest when extracting the features related to the animal's body condition score;
Figure 8a shows a process for adding a generated identification vector associated with an unknown animal to a database;
Figure 8b shows a process for promoting unknown identification vector(s) to a database;
Figure 9 shows a process for adding identification vector to a database from data obtained during an enrolment phase;
Figure 10 shows a process for training a machine-learning network to generate an identification vector generating and identification network;
Figure 11 shows a process for using a trained identification vector generating and identifying network to identify an animal;
Figure 12 shows generated identification vectors and RFIDs for animals, and selected known identification vector information and associated matching scores; and
Figure 13 shows parts of a particular identification vector, and the databases of known or unknown identification vectors.
Figure 14 shows the process of figure 2a with additional refined time window feedback arrangement;
Figure 15 shows an arrangement for correlating data from an animal recording module and an animal identification module.
Figures 16a and 16b show an exemplary arrangement of the system of Figure 15 when installed at a sort gate;
Figures 17a, 17b, 17c and 17d show an exemplary arrangement of the system of Figure 15 when installed at a rotatory parlour;
Figures 18a, 18b and 18c show an exemplary arrangement of the system of Figure 15 when installed at a herring bone parlour;
Figure 19 shows a process for operating the system of figure 15;
Figure 20 shows a process for refining a time window.

### Detailed Description

The present invention will be illustrated using the exemplified embodiments shown in the figures. While this invention has been shown and described with reference to certain illustrated embodiments thereof, it will be understood by those skilled in the art that various changes in form and details may be made therein without departing from the scope of the invention encompassed by the appended embodiments.

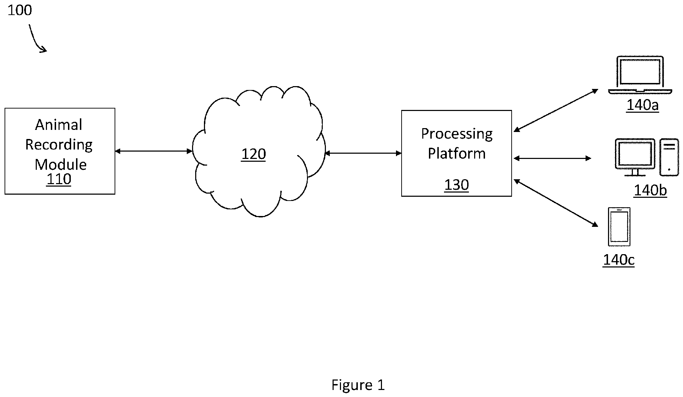

Figure 1 shows an example of a system 100 for determining the identification of an animal. The system 100 includes an animal recording module 110. The animal recording module 110 comprises at least one two-dimensional imaging sensor. The animal recording module 110 provides video from a two-dimensional imaging sensor, such as a camera. In some embodiments, the two-dimensional imaging sensor is a colour e.g., RGB camera. The video can be defined as a series of two-dimensional images or frames.

The two-dimensional imaging sensor is for obtaining images of an animal. The frame rate can be adjusted as necessary and can vary between embodiments as necessary.

In some embodiments, processing may occur on video data streams that have not been divided into frames as such. However, the processing of video data however divided, at least in outcome, is essentially equivalent to the processing that occurs in frames of data. Therefore, for brevity, only the processing of frames of data is discussed.

The animal recording module 110 may also comprise a sensor for identifying animals. Any sensing technology that shares information about the animal may be used. For example, a camera may identify the numbers on a tag that is attached to each animal. In some embodiments, the sensor comprises at least one electronic receiver for receiving wireless signals. The at least one electronic receiver for receiving wireless signals may be a radio frequency identification, RFID, reader for receiving the wireless signals such as RFID information from an RFID tag attached to an animal.

The two-dimensional imaging sensor may be configured to track one or more animals, or it may be configured to take images of any animal that moves within its field of view. In some embodiments, the two-dimensional imaging sensor may be positioned above a passageway so that one or more animals can be imaged as they pass below the two-dimensional imaging sensor.

In some embodiments, at least one other two-dimensional imaging sensor may also be located at another location, different to the location of a first two-dimensional imaging sensor. The use of multiple two-dimensional imaging sensor helps ensure any passing animals is recorded. In some cases, an animal is recorded as it passes through a first area of a space and the second two-dimensional imaging sensor may record an animal as it passes through a second area of the space, the second area being different to the first area. The first area may be an area in a vicinity of an entrance to a space and the second area may be an area within a vicinity of an exit to the space. In an exemplary arrangement, at least one two-dimensional imaging sensor may be located within a farm building, such as but not limited to, a barn and configured so as to record at least one animal as it moves about the area within the barn. The two-dimensional imaging sensor may be configured to track one or more animals, or it may be configured to take images of any animal that moves within its field of view. In some embodiments, the two-dimensional imaging sensor may be positioned above a passageway of the barn so that one or more animals can be imaged as they pass below the two-dimensional imaging sensor. The arrangement may be operable in conjunction with the sensor arrangement above a passageway as described above so as to enable monitoring of animals at separate locations within a farm environment. An advantage of such an arrangement is that the animals can be easily constrained within the field of view and the direction of motion and the ground traversed whilst imaging can be known. This helps limit the variation in the movement of animals due to environmental factors.

The animal recording module 110 is communicatively coupled to a communication link 120. The animal recording module may be communicatively coupled to the communication link 120 by a wired or wireless connection.

A video of animals obtained from the two-dimensional imaging sensor may be stored in a database, in a local or remote computer server. The database may be in any suitable form, such as a relational database like an SQL database, or in a fixed content storage system used to store video recording.

The animal recording module 110 may further be configured to transmit live video footage of the animals being observed via a wired or wireless communication network to a processing platform 130 for further processing and analysis. For example, the video footage may be retrieved directly from the animal recording module 110 by the processing platform 130 for processing and analysis over the communication link 120. Alternatively, video footage may be retrieved from the database for processing and analysis.

The software application platform may be running on a server e.g., a remote or local computer application server, and may be configured to determine an identity of the animal, based on the processing and/or analysis of the video footage. The software application platform may be configured to determine other insights of an animal, such as health and behaviour of the animal. An example health insight is the lameness status of an animal because the lameness provides a good surrogate of an animal's health, as would a body condition score of the animal. An example behaviour insight is the mobility level of an animal because assessing the mobility provides a good surrogate of an animal's behaviour. Other behaviour examples can be the mobility of the animal and other health examples can be the body condition of the animal.

When coupled to the robust identification of an animal, the inferred health and/or behaviour insight can provide important information for the user. For example, it means that one sick animal even in a large population can be quickly identified. The system can thus accurately assess the number of animals that may be sick even if the sick animals are in the midst of a large population. The results of the analysis can be transmitted, by wired or wireless communication means, to a user electronic device 140a - 140c running a software application allowing an end user to view and manage the data obtained from the livestock monitoring software platform 130. For example, an end user may share an internet protocol, IP, address of an existing camera imaging device used in a farm environment for security and/or animal observation purposes so that live video footage can be analysed and processed by the livestock monitoring software platform. The system may provide the ability to autonomously identify the animal(s) and extract insights of the state of the animal including mobility scores, body condition scores and other insights.

For example, the present invention may be used for identifying an animal amongst a plurality of animals within a herd, which is a part of livestock monitoring. By determining the identification of an animal, the behaviour and/or health of that identified animal may also be monitored and associated with the identified animal accordingly. For example, a farmer may be interested in the overall health of his/her herd. The present invention may also or alternatively determine the identity of an animal from the herd and welfare indicators of the determined animal may be associated with each identified animal. In this way, a farmer may receive notifications regarding the state of the monitored animal(s), each animal being identified amongst the herd, along with associated behavioural/health insights. The computer software application running on the device 140a - 140c may also initiate certain actions to address potential issues with the health.

The present invention determines the identity of the animal based on visual features and one or more characteristics of the animal. The visual features may be, for example, pattern markings on the body of the animal. For example, individual Friesian cows have distinctive patterns on their body. A number or pattern markings may also be added to the body of the animal to provide an artificial visual indication of the identity of the animal. The number or pattern markings may have been added to the body of the animal in a manual or automated manner known in the art.

The present invention also determines one or more characteristics of the animal from a change in animal seen in the video footage. For example, the gait of the animal may be determined to assist in identification of the animals. The one or more characteristics can also include a mobility determination and/or a health determination.

These determinations may be delivered to, for example, an end user 140a - 140c in a notification and optionally in an actionable format e.g., a list of identified animals that can be printed or emailed to a vet, or a text to the farmer for urgent alerts. For example, a farmer may receive notifications regarding the state of monitored animals on the computer software application running on his/her electronic device, and accordingly could initiate certain actions such as, for example, contacting a vet to attend to identified animal(s) having, for example, mobility issues or weight issues such as being underweight.

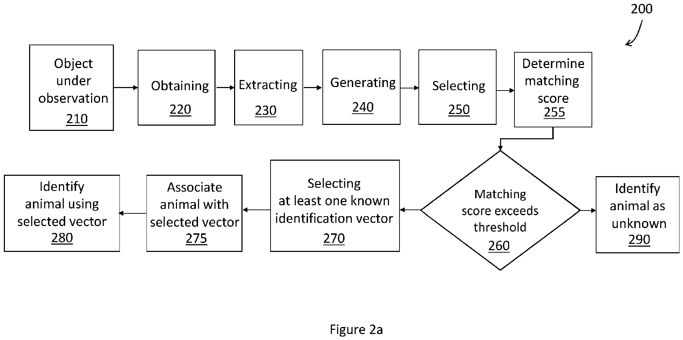

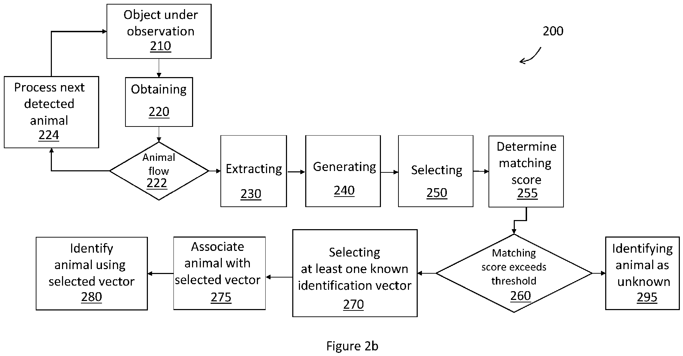

Figures 2a and 2b show a method 200 for determining an identity of an animal.

By way of illustration, a number of animals may be observed at step 210. Data associated with the animals, obtained by means of an animal recording module, may be obtained at step 220, for example, as the animals pass through a walkway. The data comprises a video from a two-dimensional imaging sensor. The obtained video data may therefore be a set of data associated with the animal moving through the space, or walkway. The set of data is then processed to extract 230 features of the animal being observed. The features include visual features and one or more characteristics of the animal being observed. The one or more characteristics may comprise a motion pattern of the animal and/or a health score. The system then extracts 230 a set of parameters from the set of obtained data associated with the animal.

During the extraction step 230, the video is separated into a set of frames. A visual feature of each animal is then determined from at least one of the frames. In some cases, the visual features will be extracted from multiple, or all, frames. Example visual feature include, but are not limited to, the pattern markings of an animal.

In addition to determination of the visual feature, during extraction 230 the system determines an instance representing a shape of the animal in each frame to form detected instances of the animal. A set of reference points in each of the detected instance is then identified. The reference points in each set of reference points represent particular positions of the animal in each frame.

One or more characteristics of the animal can then be determined by processing at least some of the sets of identified reference points in a first module, the first module comprising a trained neural network. The trained neural network identifies the characteristic of the animal that would result in the determined sets of identified reference points.

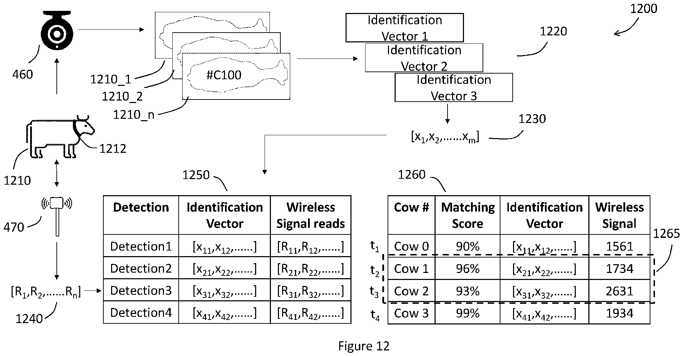

Once the visual features and the one or more characteristics for the animal have been determined, they are combined to generate a set of parameters. The set of parameters therefore comprises the visual feature and the determined one or more characteristics of the animal. For each animal, an identification vector is then generated 240 from the set of parameters. Further details of the generated identification vector are discussed below with reference to Figure 12.

At step 250, known identification vectors from a first database of known identification vectors are selected. Each known identification vector corresponding to a unique registered animal. The selection of the known identification vectors may comprise selection of the entire first database. In other embodiments, the selection will be a subset of the first database.

In some cases, the selection may be a single known identification vector. In this case the identification process serves more as a confirmation of the selected identity associated with the selected known identification vector.

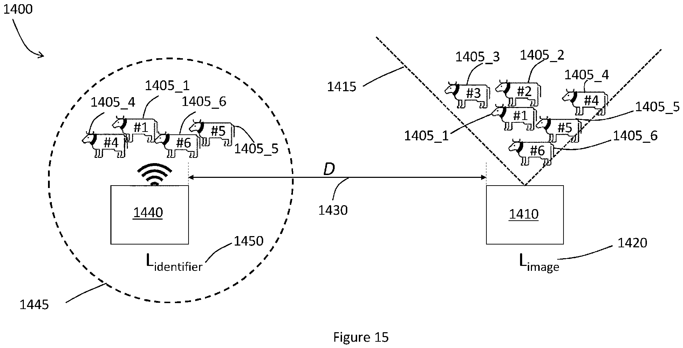

The selection can also be based on other signals. For example, acquired RFID information can be used to limit the number of candidate animals. In this case, the selection may only comprise the known identification vectors that have the acquired RFID values. Any signal or method to make the selection of the known identification vectors will result in a saving in processing because there will be less candidate known identification vectors to process. An initial range may be added to ensure the selection of the known identification vectors cover the likely candidates. For example, the selection of the known identification vectors may include all known identification vectors having RFIDs values that were sensed within 5 seconds of the time at which the video data was acquired. This range can then be further refined as successful matches are made as further described with reference to Figures 15 to 20 below.

A list of matching scores is then determined 255. The determination is made by comparing the generated identification vector to the selected known identification vectors. Any vector comparison method that provides a matching score may be used. For example, comparison based on one or more parameters of the generated identification vector and the known identification vector being within a threshold or range may be used for comparison. Increasing the number of parameters to be compared between the vectors increases likelihood of a match. In other examples, cosine similarity between the generated identification vector and the known identification vector may be used for comparison. In some embodiments, each matching score is determined by assessing the number of common values between the generated identification vector and the compared known identification vector. A common value is not necessary the same value but rather a value that is within a range of the compared value. The actual range depends on the nature of the values that are compared. Some values may have ranges associated that are larger owing to greater variation in the underlying measurement. Essentially, this is a test of vector similarity and several techniques are known and may be used to perform this test.

A test 260 is then performed to see if at least one of selected known identification vectors has a matching score exceeding a threshold.

If at least one of the selected known identification vectors exceeds the threshold, a selection is made from selected known identification vectors exceeding the threshold. In some cases, only one selected known identification vectors will exceed the threshold in which case the single selected known identification vector exceeding the threshold can be used to identify the animal. If, however, multiple selected known identification vectors exceed the threshold, then a further selection 270 is required. This further selection can be based on any criteria, such as which of the selected known identification vectors exceeding the threshold has the highest matching score. The result is the determination of a single selected known identification vector.

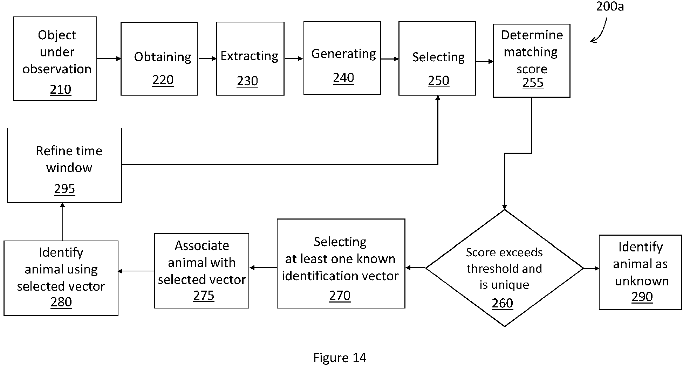

The association of the animal with the single selected known identification vector is then performed 275. Each known identification vector is associated with a unique registered animal. Therefore, the animal in the video may then be identified 280, as the unique registered animal of the selected known identification vector. As further described with reference to Figure 14 below, with a successful match made, the system can then use an offset between the RFID scan time and the animal appearing under the animal detection sensor to refine a time window of RFID scans under consideration. This will lead to less processing of potential candidates and increased likelihood of successful matches.

If the test 260 of matching scores reveals that no selected known identification vector has a matching score that exceeds the threshold, the identity of the animal is determined 290 to be unknown.

Optionally, prior to extracting the set of parameters from the set of obtained data associated with the animal at step 230, the continuous movement of the animal through the designated space may be verified, as shown in figure 2b. For example, a flow detection process may be provided to detect whether the movement of the animal through the space was continuous or impeded during the video recording. In general, the natural movement of animals through the space may be interfered by obstacles such as other animals, which may lead to skewed results. To improve the accuracy of the determination of the identification of the animal, analysis may be only conducted on intervals showing the animal moving freely through the passage. In other arrangements, monitoring of the free flowing movement of an animal may not be required such as for example when there is a single animal being monitored within the field of view of a two-dimensional imaging sensor. Preferably, video intervals showing an animal near another animal, which may impede its movement, or showing that the animal has stopped entirely, due to an animal in front or some other obstacle, may be disregarded from the identification analysis. Analysis of the animal's mobility features may only be conducted when the animal is moving freely to improve results. The animal may still be identified by analysis of visual features and body condition status. The determination with regards to the continuous movement of the animal may be obtained by analysing bounding boxes produced by a segmentation algorithm. If no sufficient intervals of free movement can be extracted, the animal is not analysed. The use of a flow detection system may be advantageous in that the identification of the animal is selectively performed on videos showing the animal moving freely through the passage. In the case, where the flow detection system determined 222 that the movement of the animal was interrupted, then the interval showing the detected animal is disregarded from the analysis, and the process moves to the next animal at step 224.

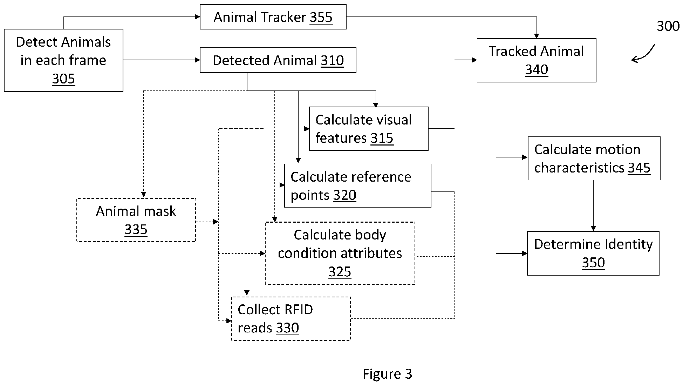

Figure 3 shows a method 300 for determining an identity of an animal and calculating at least one motion characteristic of the animal. By way of illustration, a number of animals may be detected 305 from data obtained from at least one two-dimensional imaging sensor such as described above. The animals may be detected in each frame. The animal may be detected using, for example, an object detection algorithm. For each detected animal 310, the data associated with the detected animal is processed to calculate 315 the visual features and reference points 320. Optionally, the data is processed to calculate 325 body condition attributes of the detected animal such as the amount of fat coverage of the detected animal at locations of the body of the animal. The reference point may be used to assist in this assessment by helping to select the appropriate part of the body of the animals to asses.

Optionally, the system may be configured for receiving 330 a radio frequency identification, RFID, reading of the detected animal. Optionally, a mask may be used, such as a segmentation mask, so as to distinguish an animal within a plurality of animals that may be in close proximity to one another. For the animal associated with a segmentation mask, the steps 315, 320 and 325 may be carried out. In this way, the system is able to clearly distinguish each respective animal amongst a plurality of animals thereby ensuring that any calculations of the animal attributes are assigned to the correct animal. In situations where there is only one animal that is being monitored, such segmentation mask is not required in such instance. The system may then use one or more of the calculated visual features 315, the calculated reference points 320 of the animal, calculated body condition score/attributes 325 of the animal or RFID readings and assign these to a tracked animal 340 being monitored by the imaging sensor. The system may be configured to concurrently track 355 the animal by means of, for example, an animal tracking algorithm and assign the information from the detected animal 310 to the animal being tracked. Once the system has assigned the information to the tracked animal, the system may be further configured, for each tracked animal 340, to calculate 345 motion characteristics and then determine the identity 350. In this way, the system not only determines the identity of the tracked animals but also supplements the information related to the identity of that animal with insights on their health and behaviour in the form of calculated 345 motion and/or body condition characteristics.

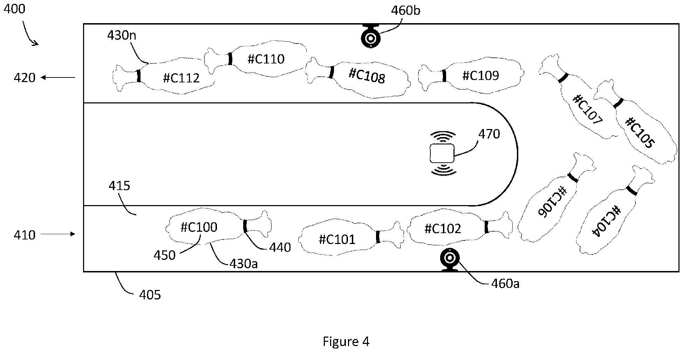

Figure 4 shows a possible arrangement 400 for capturing a recording of an animal 430a - 430n such as a cow, a pig, a horse, and the like. The animal(s) may pass through the walkway in an orderly fashion. For example, animals labelled #C100, #C101, #C102, #C109, #C108, #C110, #C112. In other instances, the animals may end up passing through the walkway in a disorderly manner and may pass each another. Therefore, the order of animals assessed by recordings and/or readings of the animal when passing through the lower half of the walkway may be different to that from recordings and/or readings that may be obtained when the animal passes through the upper half of the walkway in the illustrated example. The recording of the animal is by means of video from a two-dimensional imaging sensor 460a. Another two-dimensional imaging sensor 460b is utilized for capturing recordings of the animal at other locations throughout the walkway. The two-dimensional imaging sensors 460a, 460b may be collectively referred to as 460. Additional recordings of the animal are also obtained by means of at least one electronic receiver 470 of the animal recording module for receiving wireless signals. The electronic receiver may be for example an RFID reader and the wireless signals may be for example RFID information being transmitted from an RFID tag. In some applications, the two-dimensional imaging sensor 460 is mounted at an overhead location and a building 405, having an entrance 410 and exit 420, of a farm environment may be used for capturing the video recording. The imaging sensor may be a colour camera. The imaging sensor can be an existing camera used for other purposes, such as security and/or animal observation within the farm environment. Once video footage has been obtained, the image processing device may extract, from the animal recording module, a set of reference points associated with specific locations on the body of the animal. Other visual feature such as an identification number that has been attached to the body of the animal may be recorded and/or other visual features of the animal such as the body patterns of the animal. One or more characteristics of the animal may be determined by processing, by a trained neural network, at least some of the sets of reference points. In this way, a set of parameters comprising visual features and the determined one or more characteristics of the animal(s) can be generated.

In some embodiments, an electronic receiver 470 may be located adjacent, or near, the position of the two-dimensional imaging sensor 460 at a height for receiving a wireless signal identifying the animal. The wireless signal identifying the animal may be sent from a wireless sensor 440 attached to the body of the animal as the animal passes by the receiver 470.

For example, the wireless signal identifying the animal may be an RFID tag attached to at least one location on the body of the animal, the RFID tag configured to transmit the wireless signal containing information related to the animal to which the tag is attached. The wireless signal being received by the electronic receiver 470, which in this example may be an RFID reader that is configured to receive the wireless signal and obtain information identifying the animal from the RFID tag output. The RFID tag is thus communicatively coupled to the RFID reader to send RFID information of the associated animal to the RFID reader as the animal passes the RFID reader as it moves through the walkway 415. The RFID information of the associated animal may comprise a unique identification for the respective animal.

Once video footage has been obtained, the processing device extracts a set of parameters from obtained data associated with the animal moving through the space. The data comprising a video from a two-dimensional imaging sensor.

The extracting may comprise the steps explained above in reference to figure 2a. In each set of reference points identified in each of the detected instance, each reference point has an x and y coordinate. The x and y coordinate values of each reference point may be extracted to determine the position of each reference point and consequently the movement of each corresponding body part, across the set of individual frames. The processing platform, based on the x, *y,* or x and y coordinate values of the extracted set of reference points corresponding to each individual frame, may determine a characteristic score, which is indicative of the characteristic such as a motion pattern of the animal.

The reference points in the frames and/or their relative change in position between frames may allow the determination of the following insights. A change in reference points' position between frames may be used to analyse the mobility of the animal, thus providing a behaviour insight to aid in the identification of an animal. A change in reference points' position in a frame may be used to assess the lameness level of the animal, thus providing a health insight to aid in the identification of an animal.

A change in the reference points can assist in locating the areas of image data in a single frame to assess for excess fat cover, for body condition scoring, thus providing a health insight to aid in the identification of an animal. Thus, variations in the coordinate values of the reference points may be indicative of issues in the animal such as, for example, mobility issues in the animal that can be used in identifying a particular animal.

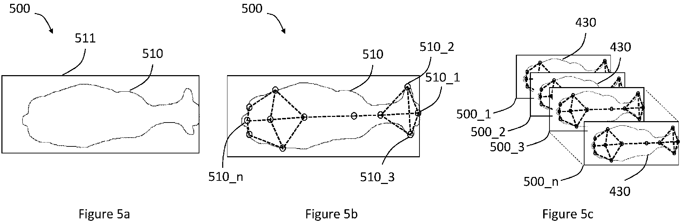

Figure 5a illustrates further details of the processing of the data associated with an animal as obtained from an animal recording module. A segmented image 500 obtained during the extraction step 230 from the animal recording module 110 is shown. An instance of the animal body 510 is detected in the segmented image 500. The animal instance 510 may be detected by an object detection algorithm which creates a bounding box 511 around the detected instance 510. Figure 5b then shows the set of reference points 510_1 to 510_n that have been identified by processing the detected instance 510 of the segmented image 400 of the animal. In the example illustrated in Figure 5b, twelve reference points, shown by the circular shapes, are identified along the body of the animal from the head to the tailhead. Figure 5c then shows a set of segmented images 500_1 to 500_n of the animal 510, one per frame, with the identified reference points. This is therefore a set of reference points.

EP application EP20183152.6 filed on the 30 June 2020 describes an exemplary process that may be used for determining the reference points on locations of the animal instance.

In summary, the exemplary process performs the following steps:
i) providing data input, for example a number of videos obtained from animals in different farms. For example, a data set of three hundred video recordings of animals moving through a predetermined space may be provided for training a standard ID classification network of the system to identify reference points on the body of an animal. For example, the ID classification network may be a neural network, such as a ResNet50, or ResNet101, or another type of a convolutional neural network, CNN, architecture. At a training stage, each reference point may be manually labelled. Furthermore, the classification network may be trained on historical video recordings from the same animal, to cope with animals that have a naturally abnormal locomotion, avoiding the case of false positives.
ii) detecting the reference points, which may be performed using the trained ID classification network of step i). A standard classification layer within the convolutional neural network may be replaced by deconvolution layers to scale feature maps of the animal into heatmaps representing areas of likelihood for each reference point via training on the data from step i)
iii) extracting x and y coordinate values for each reference point in each frame. The reference points x and y coordinates values may be taken as the areas of highest magnitude from the heatmaps produced in step ii). These reference points may then be associated with a specific instance of each animal using a pre-calculated segmentation mask.

Using at least twelve reference points ensures processing efficiency while minimising the number of data/information that needs to be processed by the processing device and thus improving the ability to identify motion pattern issues of the animals such as lameness or body condition issues such as the animal being underweight.

In an alternative arrangement, reference points may be extracted by an algorithm trained on identifying the shape of the animal in the field of view of the two-dimensional imaging sensor. The reference points may then be used in conjunction with at least one or more of the following, an algorithm for determining the mobility of the monitored animal(s), an algorithm for determining the body condition score, BCS, of the monitored animal(s) or as a secondary feature set for the determining the identification of the monitored animal. For example, an identification algorithm may, instead of using reference points, pass data from the two-dimensional imaging sensor for a particular animal to a ResNet50 neural network. The output from one or more of the reference point algorithm, the mobility algorithm and the body condition score algorithm may then be used to buttress the identification algorithm and provide an overall feature vector output from the identification algorithm for identifying a respective animal. The algorithm may be an algorithm such as You Only Look Once- Pose, YOLO-Pose.

One or more characteristics for the animal may also be determined, by means of a convolutional neural network. To assist in processing, the set of reference points may be formed into multidimensional array. To form the arrays, the x and y coordinate values of each reference point are extracted, generating a first array and a second array for each individual frame. The first array comprises the x coordinate values of the reference points in each individual frame, and the second array comprises the y coordinate values of the reference points in each individual frame. The values in the first and second arrays are then combined to create a multi-dimensional array of x and y coordinate values having a size defined by the number of individual frames and the number of reference points.

The convolutional neural network is be trained to determine one or more characteristics of an animal based on the movement obtained from corresponding reference points. In one example neural network, the steps for determining a mobility score of the animal comprise successive convolution and pooling iterations on the x and y coordinate values of the extracted set of reference points corresponding to each individual frame of the input data. The initial values for the kernel and filter are randomly selected and are gradually refined through the training of the network on the provided data. Following each convolution, a batch normalization and a rectified linear unit (ReLu) activation may be performed. Following the successive convolution and pooling iterations an average pooling on the output may be performed. A linear activation may be performed on the output of the average pooling operation. Following the linear activation, a score indicating the mobility score of the animal is generated. In this way, the initial filtering and max pooling performed by the successive convolution and pooling iterations is passed along the temporal axis, wherein the temporal axis may be indicative of movement across the input matrix from one reference point to another reference point, for example from the head to the ear to the tail and so on, with a final filtering process along the feature's axis, wherein the feature's axis is indicative of movement from frame one to two to three and so on, before being passed to a final fully connected layer with linear activation within the image processing platform. The final result of the analysis is the generation of a mobility score e.g. a floating-point number between 0.0 and 100.0, indicating the level of mobility. For example, a score of 0.0 may indicate an animal with a high degree of mobility, whilst a score of 100.0 may indicate a poor degree of mobility. These values may be translated using thresholds to other measures. For example, a 0.0 may be translated to a ROMS score of 0, which may indicate absence or a low degree of lameness whilst a 100.0 may be translated to a ROMS score of 3 signifying a high degree of lameness in the animal. In this way, insights based on the score determined by the CNN may be delivered to, for example, an end user of the system in a notification and optionally in an actionable format e.g. a list of animals may be printed or emailed to a vet, or a text to the farmer for urgent alerts.

In some cases, the above-mentioned method of assessing the mobility score, which does not use a neural network can be used to provide the training of the network. Alternatively, expert labelling of the mobility score can be used to provide training data. The mobility score information may then be used as a secondary data set to assist in the identification of an animal where the primary data set may be the data passed from the two-dimensional imaging sensor for a particular animal to a ResNet50 neural network to identify the animal. In this way, the one or more characteristics, such as mobility score, supplements the determined identity of the animal as determined via, for example, the ResNet50 neural network.

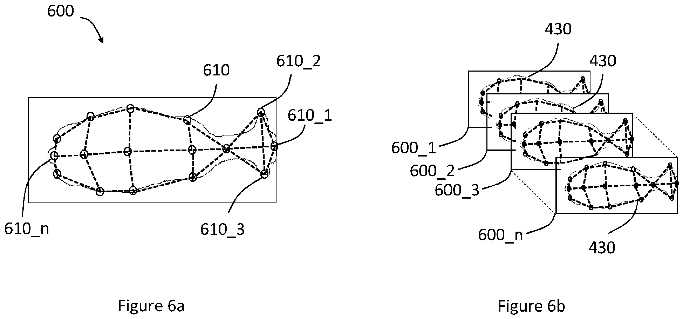

Figures 6a and 6b illustrate an instance of an animal body 610 which may be detected in the segmented image 600 in a manner similar to Figures 4b and 4c. In the example arrangement, there is shown 16 reference points shown by the circular shapes, which are identified along the body of the animal from the head to the tailhead. Figure 6b shows a set of segmented images 600_1 to 600_n of the animal 610, one per frame, with the identified 16 reference points. Increasing the number of reference points is advantageous in that it provides a means of being able to generate areas of focus which the health and/or behaviour algorithms can then provide insights.

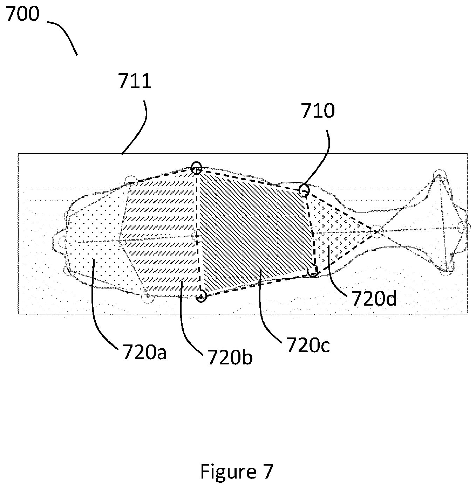

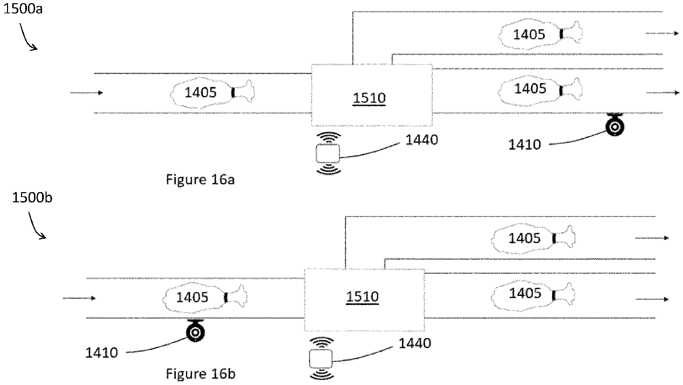

Figure 7 illustrates an instance of an animal body 710 which may be detected in the segmented image 700 and analysed for body condition scoring. The animal instance 710 may be detected by an object detection algorithm which creates a bounding box around the detected instance in a manner similar to that as described with reference to Figures 4a - 4c. Figure 7 shows the set of reference points 710_1 to 710_n that have been identified by processing the detected instance 710 of the segmented image 700 of the animal. In the example illustrated in Figure 7, 16 reference points, shown by the circular shapes, are identified along the body of the animal from the head to the tailhead. The object detection algorithm analyses the entire body of the animal and may be configured to utilize the reference points so as to generate areas of focus 720a - 720d that the algorithm can then provide health and/or behaviour insights of the animal at the one or more respective areas of focus. In an example arrangement, an algorithm such as a You Only Look Once, YOLO, algorithm may be used to produce the above mentioned bounding boxes for each animal. The bounding boxes may then be passed to a reference point algorithm so as to enable the algorithm to identify reference points from the respective animal detected within the bound box. These reference points are then used to determine insights of the animal such as, for example but not limited to, health and/or behaviour insights. More specifically, Figure 7 shows the key areas of interest that the body condition score neural network will focus on to determine the body condition score. These are the pin bones and tail region 720a, the hook bones and rear spine region 720b, the ribs and mid spine region 720c and the front spine region 720d. Analysis of these regions will produce an estimate of the total fat coverage of the animal.

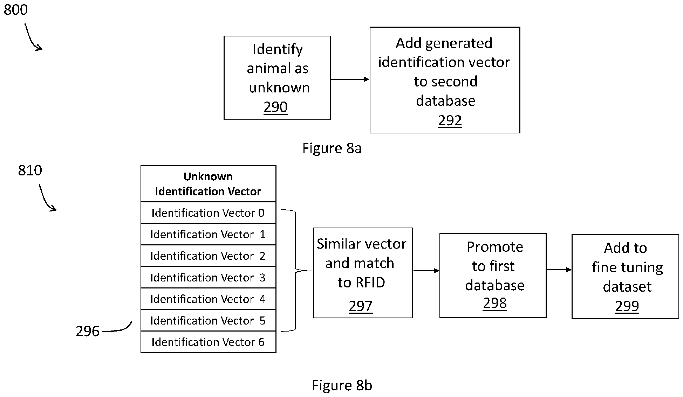

Figure 8a shows an example method 800 for managing an animal that has been identified as being unknown. The identification vectors associated with the unknown animal may be stored in a database for future cross referencing. Following the generation of the identification vector of the animal being observed, the animal is identified 290 as an unknown animal following the determining step 260 of Figure 2a. The generated identification vector for the unknown animal is added 292 to a second database containing unknown identification vectors i.e. unknown or unregistered animals. In this way, the second database may keep a record of unknown identification vectors. In other words, the generated identification vector of animals whose visual features and one or more characteristics are not sufficiently similar to known identification vectors are stored for future use. This will then permit the future registration of currently unknown animals.

Subsequent processing 810 of the unknown identification vector database is shown in Figure 8b, a plurality of identification vectors may be compared 297 to identify similar identification vectors within the database and to identify matching identification obtained from another data source such as an RFID tag associated with an animal. The system will then identify these previously unknown identification vectors as being associated with a particular animal. The unknown identification vectors that have been identified with an animal are then promoted 298 to the first database. In this way, the system is able to automatically increase the number of known identification vectors in the system. In other words, the system can automatically expand to include new animals. This means the system can be integrated into existing systems such as those that utilize RFID's and RFID tags attached to an animal for identifying the animals. Existing systems may not provide identification of each and every animal due to issues such as, for example, where an RFID tag has become detached from an animal and therefore when the animal passes an RFID reader, the animal is not identified due to the missing RFID tag. Accordingly, the system supplements such existing systems as it may be adapted to identify new animals and therefore the system can automatically expand to include new animals which may not be otherwise identified due to, for example, missing ear tags for RFID identification or may not be tagged due to being recently included within the population of animals within, for example, a farm environment. In addition, the identified animals can be used to fine tune the neural network further 299 to improve the ability to discriminate between different animals on future days as conditions on the farm, such as weather and lighting gradually change over the course of time.

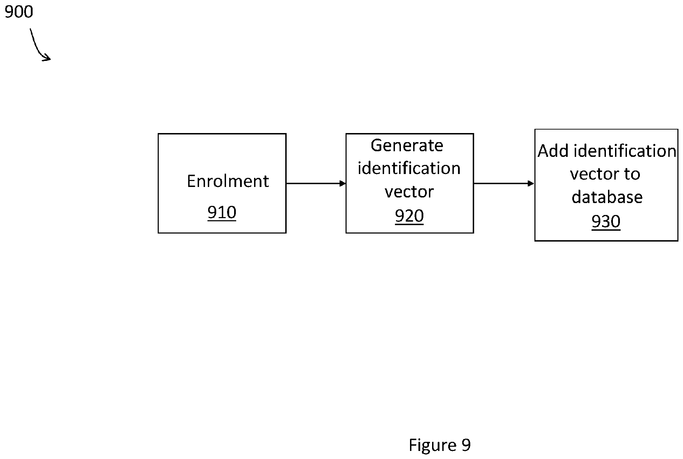

Figure 9 shows an example method 900 for the identification of the animal(s). The method comprises an enrolment 910 for enrolling the animal(s) into the system, generating an identification vector at step 920 for generating the identification vectors from the generated set of parameters for individual animals, and adding 930 of the identification vectors to a first database. In the arrangement shown, the enrolment step may be adapted to allow the animal to be enrolled onto the system through preparation of a labelled dataset of the animal(s) thereby ensuring that the identification vectors for each animal is allocated to the correct animal thereby avoiding misidentification. In this way, a database of known identification vectors may be provided such that the known identification vectors correspond to a unique animal for future comparison of an observed animal to identify whether the observed animal is known or not.

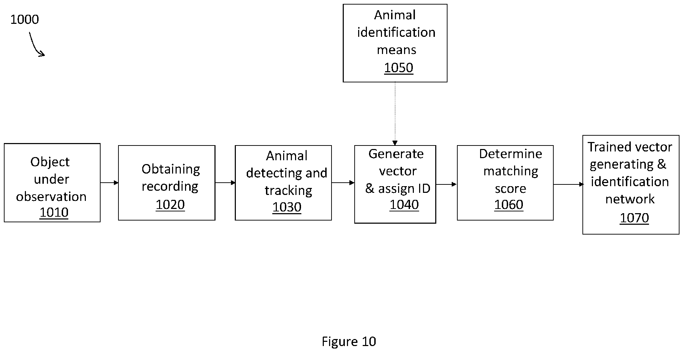

Figure 10 shows a process 1000 for enrolling an animal. For example, and with reference to Figure 4 discussed above, during the enrolment step, the animal(s) under observation 1010, 210 may move along the walkway 415. A recording of the animal(s) will then be obtained 1020 from the animal recording module 110. An additional source 470 also obtains the identity the animal(s). For example, the actual identity of the animal may be determined by an RFID reader configured to receive a radio frequency identification, RFID, tag 440, attached to the body of the animal. Alternatively, the identity could be obtained from a visual reading of a number marking 450 on the body of the animal. The information is recorded in the order in which the animal(s) passed the two-dimensional imaging sensor 460. Arrangements may be put in place to ensure that the order of the animal(s) does not change during the enrolment process i.e., a walkway may be dimensioned such that animal(s) pass through the walkway in single file and therefore ensure the animal(s) cannot overtake one another as they walk through the walkway thereby enabling to keep track of the animal(s).

The enrolment data may then be stored in a computer readable format, e.g. JavaScript Object Notation (JSON), extensible mark-up language (XML) and the like and may contain a list of animal identifications in the order they passed the animal recording module 110, 460, 470. Video footage associated with the enrolment may then be passed through a video processing algorithm of the processing device 130. The video processing algorithm may then be adapted to perform at least the following tasks:
i) each video frame is passed into a previously trained object detection network 1030 which creates a bounding box for each animal instance/image detected in each video frame and optionally a segmentation mask may be created for each animal instance/image detected in each video frame. A segmentation mask enables the object detection algorithm to focus on a respective animal within the created bounding box when there are, for example, overlapping portions of another or plurality of animals in the created bounding box of the respective animal.
ii) the bounding boxes generated for each animal are then passed into an object tracking algorithm 1030 which groups multiple bounding boxes across frames and generates an identification vector and assigns an identification obtained from an animal identification means, such as RFID tag, which corresponds to an individual animal in the footage. As will be described further below with reference to Figures 14 to 20 below, a further exemplary arrangement is provided whereby once a group of animals are processed in a time window, the system is configured to collect all the tracked bounding boxes and all the ID reads from any ID device, such as an animal recording module, which may be a camera, and animal identification module, which may be an RFID reader, in the area that the system is installed/deployed and the system, by comparing the collection of reads, the identification vectors and the number of times the identification module has determined or detected that an ID was in the vicinity whenever an animal with these vectors was under our camera, the system can distil down to the most common identification for an animal.
iii) for each animal detected in the video recording, at least ten bounding boxes may be selected from corresponding number of frames which are extracted as images.

The animal(s) detected as above may then be sorted by an order they appeared in the footage and synced up with the actual animal identifications, IDs, 1050, 440 as obtained earlier from the additional source 470. The synced-up identifications from the enrolled animals may be used as training data in conjunction with the images extracted in step iii) for determining a matching score at step 1060.

The trained vector generation and identification network 1070 processes new video footage as per steps (i) - (iii) above. For each animal detected in the video recording, each image generated at step (iii) may be passed through the trained vector generation and identification network 1070 to generate an array of identification vectors for each of the enrolled animals. These identification vectors may then be averaged over a number of images e.g. five, ten or more images extracted in step iii) above from the video frames to generate one identification vector for the detected animal. Once all the footage has been processed, the identification vectors for each animal are post-processed to assign the most likely identification to that animal based on the identification vectors for all other animals. By post-processing the identification vectors generated for each animal it is possible to prevent assigning the same ID to more than one animal. Furthermore, post-processing allows to check for animals which may not have been enrolled in the system or there may be an issue with the enrolment data. In this way, by assigning an identification by animal identification means, the system provisions a means for easily detecting each individual animal amongst a plurality of animals by enabling a unique identification to be assigned to each animal therefore avoiding potential issues, such as, mistaken identity and therefore preventing assignment of an identification to the wrong animal. As such, based on the enrolment data the system may detect the identity of each individual animal without the need of manual intervention e.g., reading the RFID tags, and the like.

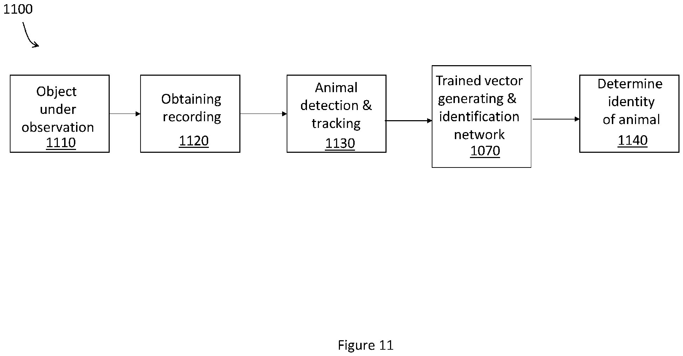

Figure 11 shows a process 1100 for identifying an animal based on a previously trained vector generating and identification network 1070. For example, an arrangement for capturing images on an animal 1110 may be provided as per the arrangement discussed with reference to Figure 4. The arrangement may be configured to capture recording 1120, 460, 110 of a plurality of animals or an individual animal. Said recording may then be analysed by a processing platform 130. The processing platform may then utilize object detection and object tracking algorithms 1130, such as those previously discussed, to detect and track the animal(s) within the recording. Data for the animal(s) detected and tracked by the image processing platform may then be processed by the trained vector generating and identification network 1070. In this way, new footage obtained by the animal recording device may be processed by the arrangement illustrated to assess at step 1140 an identity of the animal(s) in the new footage using a previously trained vector generating and identification network 1070. This provides a way to check for animal identifications which likely have not been enrolled in the system. Advantageously, the system continuously updates with animal identification information thereby training and learning as the system autonomously analyses the information obtained for respective animals.

Figure 12 shows an arrangement in which a trained vector generating and identification network may be used to identify the individual animal 1210. There are a number of bounding boxes of the same animal from different subsequent frames 1210_1 through to 1210_n, similar to those as illustrated in Figures 5c, 6b. Each individual bounding box is passed through the trained vector generation and identification network 1070 as previously described with reference to Figures 10 and 11 for extraction of features of the animal i.e., reference points, pattern etc. via for example, but not limited to, deep learning models such as ResNet50 and the like, and reference points are extracted, so as to generate a vector 1220 comprising identification information and an average of the identification vectors are taken to form a generated identification vector 1230. In addition to the feature extraction, RFID information from an RFID tag 1212 of the animal is obtained by an RFID reader 470. Other sensor technology for providing identity of an animal may also be used alternatively or additionally. The wireless signal information from the wireless transmitter 1212 is extracted to form a wireless sensor read vector 1240. Each animal detection, detection 1, detection 2 and so on each has an associated identification vector and wireless signal read vector. In other words, the system makes a number of detections of animals and obtains via the animal recording module a set of data associated with the animal moving through a space, or walkway. A set of parameters from the set of obtained data associated with the animal is extracted from the animal recording module using the processing device platform. The system may be configured to generate an identification vector from the set of parameters for each detection as illustrated 1250. The system may be configured to select known identification vectors from a first database of known identification vectors where each known identification vector corresponds to a unique animal. The system may determine a list of matching scores by comparing the generated identification vector to the selected known identification vectors as shown 1260. Any vector comparison method that provides a matching score may be used. For example, comparison based on one or more parameters of the generated identification vector and the known identification vector being within a threshold or range may be used for comparison. Increasing the number of parameters to be compared between the vectors increases likelihood of a match. In other examples, cosine similarity between the generated identification vector and the known identification vector may be used for comparison. In another example, each matching score is determined by assessing the number of common values between the generated identification vector and the compared known identification vector. A common value is not necessary the same value but rather a value that is within a range of the compared value. The actual range depends on the nature of the values that are compared. Some values may have ranges associated that are larger owing to greater variation in the underlying measurement.

In response to determining at least one of known identification vector has a matching score exceeding a threshold, the one of the at least one known identification vector is selected the animal is identified using the selected known identification vector as illustrated by the wireless signal information being associated with the animal number, a cow in the illustrated example of 1260 along with a matching score and identification vector information.

As shown, a series of signals such as the wireless signals from an RFID tag may be detected. Each signal includes a time and associated with a unique animal 1210. The selection of known identification vectors from a first database of known identification vectors may further comprise determining a time that the animal recording module 110, 460, 470 obtained the data 1230, 1240 and a time range that is within a range of the determined time. The series of signals may be filtered to select only the signals from the series of signals within the time range. In the illustrated example, the series of signals are 1561, 1734, 2631 and 1934 over a time range of t₁ - t₄. The signals are filtered to select those signals from the series of signals within the time range t₂-t₃ 1265. From this time range, the known identification vector of the unique animal of the selected signals having the highest matching score is selected thereby determining the identity of the animal that was observed.

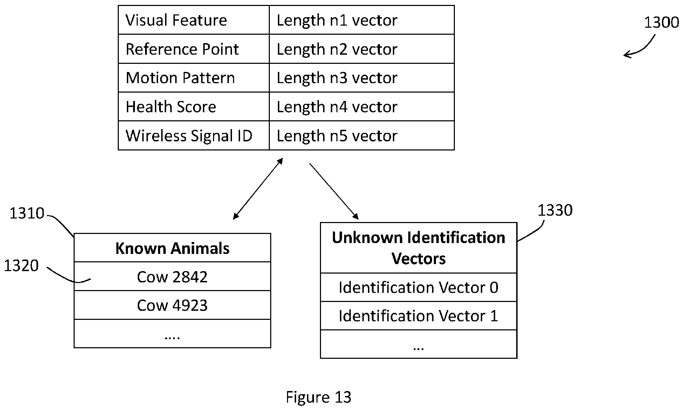

Figure 13 shows a table 1300 of a set of parameters comprising visual features, health and behaviour features and wireless signal identification information. The table contains information associated with the visual feature of the animal having a length n1, information associated with the reference points of the animal having a length n2, information associated with the motion pattern of the animal having a length n3, information associated with the health score, such as for example a body condition score, of the animal having a length n4 and information associated with the wireless signal from the animal having a length n5. The lengths n1-5 can vary between embodiments and need not necessarily be the same size. The reference point, motion pattern and health score information are examples of the one or more characteristics of the animal previously discussed. Mobility and body condition score information are further examples of the one or more characteristics of the animal previously discussed. The table may thus comprise visual features, mobility features, body condition features and wireless signal IDs. The identification vector information is averaged across frames from the recording of the animal and stored in a database. Based on the matching score information previously discussed, the identification vector information is either stored in a database 1310 of known animals thereby being considered as a known identification vector corresponding to a unique animal 1320, or may be stored in an unknown identification vector database 1330 thereby being considered as identification vectors which do not correspond to a unique animal. The known animals and unknown identification vector databases are then continuously referred to and updated in response to performing the process of determining the identity of an animal as previously discussed. Accordingly, information on each known and unknown animal is retained in respective databases. In further detail, during a continuous monitoring of the animals, the unknown animals for which an identity has not been determined are promoted to the database of known animals upon determining the identity of that animal following processing of the animal and the confidence of their identity as being that of a known animal exceeding a predetermined threshold. Conversely, when a confidence level on the identity of what was previously a known animal drops below a predetermined threshold, the system re-considers, or identifies, the animal as an unknown animal and un-enrols the animal from the database of known animals to the database of unknown animals. The system automatically and continuously updates the databases based on analysis and determination of whether the animal being monitored is a known or unknown animal. In other words, the system trains and learns from the animals being monitored but never forgets and therefore continually updates based on information being obtained and information previously obtained whether the animal is a newly introduced animal or part of a new herd for example or part of an existing herd. Due to the autonomous nature of the system, the system reaches a confidence level for an animal being monitored and assigns it to the known database and as a confidence level drops, the system determines the animal as unknown and assigns the animal to the unknown database.

Figures 14 shows a method 200a for identifying an individual. By way of illustration, the method 200a is similar to the method 200 as illustrated in Figure 2a with the exception of the inclusion of step 295. Each of the steps 210, 220, 230, 240, 250, 255, 260, 270, 275, 280, 290 are as described above for Figure 2a. In arrangement shown, with a successful match, the system may use an offset between an RFID scan time and the time an animal appears under the animal detection sensor, or video/animal recording module 110, to refine a time window of RFID scans under consideration 295. The arrangement does not only capture video of animal identification information from, for example, an RFID during a particular time window, the identification, or RFID information, and video is captured over a continuous period of time and when the system is processing the data, a time window is generated, that is, a time window is used to process a portion of the data captured. This time window can be adjusted and refined to improve the processing and determination of animal identity. This will lead to less processing of potential candidates and increased likelihood of successful matches.

In a similar manner, the arrangement of Figure 2b may be further amended with the incorporation of step 295 after step 280 and feedback to step 250 so as to incorporate the refined or adjusted time window for receiving animal identifier information at the animal identification module so improve the processing of potential candidates and increased likelihood of successful matches.

Figure 15 shows an exemplary system arrangement 1400 for determining an identity of an animal. In this embodiment, one or more of animals 1405_1 - 1405_6 may be observed by at least one animal recording module 1410, such as for example a camera, when the animal(s) are within the field of view 1415 of the animal recording module. In this way, the visual information of the animal is obtained as described previously as the animals pass within the field of view of the animal recording module 1410. The data comprises a video from a two-dimensional imaging sensor. The two-dimensional imaging sensor may be a colour camera. The animal recording module 1410 is located at a first location 1420, L_{image}. The two-dimensional imaging sensor may have a field of view between 30 to 150 degrees, preferably 20 to 160 degrees. The animal recording module may be configured to identify individual animals within the first time window and associate the individual animals 1405_1 - 1405_6 with a time stamp corresponding to a point of detection for that animal.

One or more of animals or a subset of animals 1405_1 - 1405_6 is detected by at least one animal identification module 1440. Animals may not follow a necessary path or an animal identifier, such as for example an RFID device in the form of an RFID tag, may become detached from an animal and therefore not all of the animals observed via the animal recording module 1410 may be detected or identified at the animal identification module 1440. The animal identification module is configured for obtaining at a second time over a second time window, data associated with an identifier of each of a subset of the plurality of animals 1405_1 - 1405_6. The identifier may be, for example but not limited to, RFID information from an RFID device, such as an RFID tag, attached to an animal(s) and the animal identification module may be, for example and not limited to, an RFID reader. The at least one animal identification module has a range of detection 1445 for detecting information associated with the animal(s) 1405_1 - 1405_6. The range of detection may be up to 5 metres, 5m, preferably up to 3 metres, 3m. It will be appreciated that the range of detection may be greater or less than 5m depending on the type of RFID reader being deployed and the location of the RFID reader. For example, other technology such as active tags may be utilized that may have a range of up to 100 metres, 100m. The at least one animal identification module 1440 is located at a second location 1430, L_{identifier}. The first location 1420 is spaced apart from the second location 1450. The first location 1420 may be spaced apart from the second location 1450 by a distance, D, of up to fifty metres, preferably up to 10 metres. It will be appreciated that the distance, *D*, may be greater or less than these distances and may be determined based on the installation of the system. A smaller the distance results in a smaller time window with a smaller number of candidates, or animals.

The system may be configured to operate when the animal recording module and the animal identification module are physically close together or at the same location. In some arrangements, the range of detection and the field of view are not coincident. In some arrangements, the range of detection and the field of view may partially overlap by up to, for example, 10 to 20%, may completely overlap or may not overlap. It will be appreciated that the detection range may or may not be within the field of view and is based on the installation arrangement. The at least one animal identification module 1440 may be configured to identify individual animals within the second time window and associate the individual animals 1405_1 - 1405_6 with a time stamp corresponding to a point of detection for that animal.

In the embodiment shown, the animal recording module 1410 and the animal identification module 1440 are capturing/obtaining data continuously. The system may be configured to process the obtained data and artificially overlay or place a time window on the obtained data for refining or adjusting processing or analysis of this information as part of determining an identity of the animal(s) 1405_1 - 1405_6. For example, once the animal recording module observes or detects an animal, the time window for the animal identification module may be the camera time +/- 300 seconds, giving a 10 minute time window or the time window could be +600 seconds from the camera time and -300 seconds from the camera time. The +/- values of the time window can be adjusted or refined over time to different values based on the system adapting to the obtained data. The time windows are either reduced or increased in width or the time windows, for the respective modules, are moved relative to one another.

In the embodiment shown, a correlation may be performed on the individual animal identified by the at least one animal recording module 1440 at the first time window with the animal identified by the at least one animal identification module 1440 at the second time window. The time windows are configured to be adjusted in order to maximise the correlation between the two independent systems, 1410 and 1440, in order to increase likelihood of successful matches for the animal(s). So, there are two independent systems, one that knows that a known identity was present at a known location at a known time and another that knows an unknown identity was present at the animal recording module location at another time.

Over time, the system is able to compare the visual detections from the recording module to a list of common RFID signals, or identification from the RFID reads of RFID devices, such as for example RFID tags, obtained from the identifier module and eventually deduce and match correct animal RFID signal to the visually detected animal. As such, the combination of two independent systems unite together to provide the identity to an animal(s). The system may be configured such that the system may need to observe or see the animal for at least four occurrences, or instances, before the system is able to identify and enrol or register the animal in, for example, a database of known animals in an enrolling phase, or process, as previously described. Advantageously, the two independent systems overcome any issues related to time issues as a result of using two systems such as an RFID reader and the camera. Some systems may be out of synch due to day light savings or computing device time differences and as a result the animal recording module and the animal identifier module are out of synch. Due to the arrangements for retrieval of the animal image and identification, the systems and methods address such synching issues.

In one example, the system and method obtains a list of reads which is then refined over an adjusted period of time whereby the system is able to determine that it has seen a particular animal, say cow#1, before based on the cows visual behaviour and/or health but based on what is seen in the animal recording module there may be another twenty candidates but the system can determine that out of these twenty, seven of the candidates are similar and therefore narrows the number of candidates down to seven. The system knows that it has seen cow#1 twice now and it is one of these seven candidates and this candidate listing will continue to be refined until eventually the system gets to a stage where the candidate cow can only be this identity, cow#1. The system may take up to four days to lock in or to be able to register, or enrol, that animal identity, depending on the farm set-up and system set-up on the farm. Furthermore, a process of elimination may be considered. For example, if the system previously determined an animal could be cow#1 or cow#2 but the system has since assigned cow#2, the system will then know that the current animal being identified cannot be cow#2 so it has to be cow#1 and therefore will identify the animal as cow#1. As such, the system goes through a continuous iteration of refinement of assessing that the animal cannot be this cow identity anymore and must be any one of the remaining candidates.

Furthermore, through an on-boarding process, or when any new animal is introduced onto the farm or when an identifier such as an RFID device is replaced on a particular animal, the system is able to identify this/these animal(s) in the future time based on the obtained data from the animal recording module and the animal identifier modules. The arrangement is not limited to the animal recording module 1410 detecting the animal(s) and then the animal identification module 1440 detecting the animal(s) after the animal recording module 1410, the arrangement is such that the animal(s) may be detected at the animal identification module 1440 and then at the animal recording module 1410.

Figures 16a and 16b illustrate an exemplary arrangement of the system described for Figure 15 when installed or deployed at, for example, a sort gate 1510. In the arrangement 1500a of Figure 16a, a sort gate 1510 is shown having one entry path and two exit paths. The sort gate may have more or less entry or exit paths than shown. It will be appreciated that other entry and exit path arrangements may be considered. An animal 1405 is shown in each of the entry and exit paths of the sort gate. In the installed arrangement, the animal recording module 1410 may be located along the exit path(s) of the sort gate 1510 while the animal identification module 1440 may be located at the sort gate 1510. In the arrangement 1500b shown in 16b, the animal recording module 1410 may be located along the entry path to the sort gate 1710 while the animal identification module 1440 may be located at the sort gate.

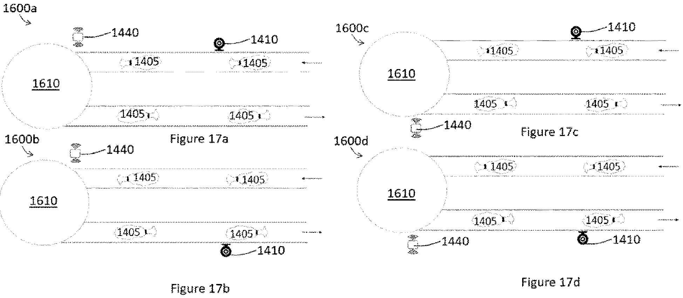

Figures 17a, 17b, 17c and 17d illustrate an exemplary arrangement of the system described for Figure 15 when installed or deployed at, for example, a rotatory parlour 1610. It will be appreciated that other entry and exit path arrangements may be considered. The rotatory parlour 1610 may have more or less entry or exit paths than shown. In the arrangement 1600a of Figure 17a, a rotatory parlour 1610 is shown having one entry path and one exit path. Animal(s) 1405 are shown in each of the entry and exit paths of the rotatory parlour. In the installed arrangement, the animal recording module 1410 may be located along the entry path of the rotatory parlour 1610 while the animal identification module 1440 may be located at or near the rotatory parlour 1810 at the entry path side. In the arrangement 1600b shown in Figure 17b, the animal recording module 1410 may be located along the exit path of the rotatory parlour 1610 while the animal identification module 1440 may be located at or near the rotatory parlour 1610 at the entry path side. In the arrangement 1600c shown in Figure 17c, the animal recording module 1410 may be located along the entry path of the rotatory parlour 1610 while the animal identification module 1440 may be located at or near rotatory parlour 1610 at the exit path. In the arrangement 1600d shown in Figure 17d, the animal recording module 1410 may be located along the exit path of the rotatory parlour 1610 while the animal identification module 1440 may be located at or near the rotatory parlour 1610 at the exit path side.

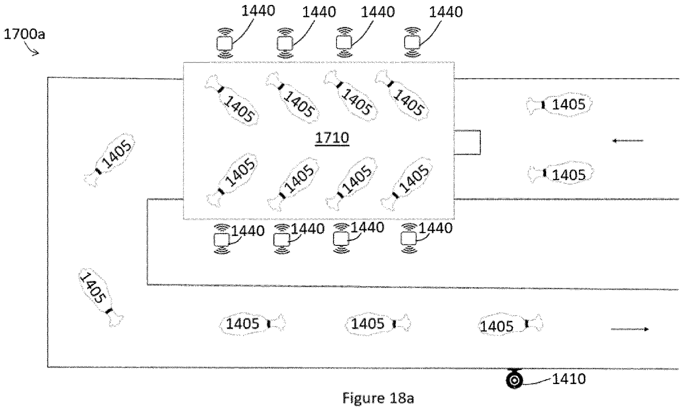

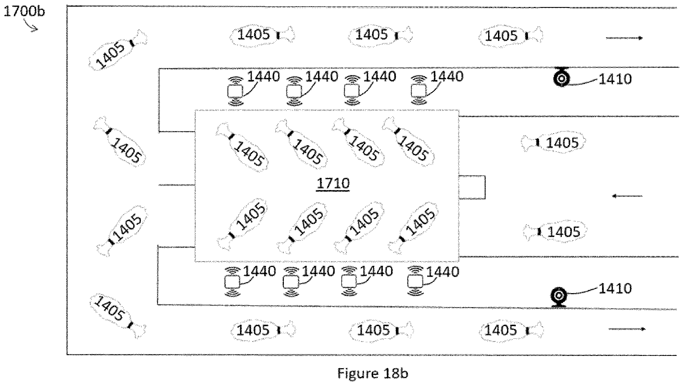

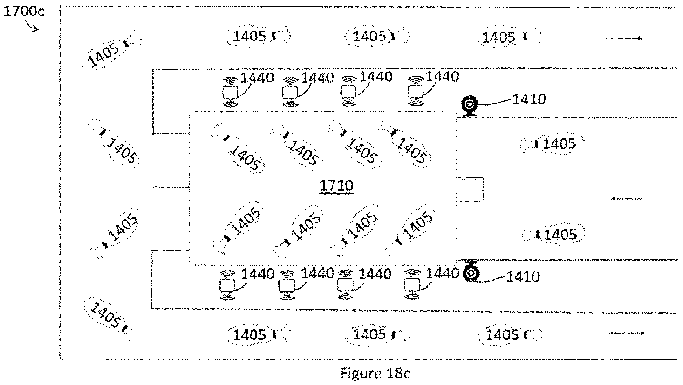

Figures 18a, 18b and 18c illustrate an exemplary arrangement of the system described for Figure 15 when installed or deployed at, for example, a herring bone parlour 1710. It will be appreciated that other entry and exit path arrangements may be considered. The herring bone parlour 1710 may have more entry or exit paths than shown. In the arrangement 1700a of Figure 18a, a herring bone parlour 1710 is shown having two entry paths and one exit path. The herring bone parlour 1710 may comprise a plurality of animal identification modules 1440. Animal(s) 1405 are shown in each of the entry and exit paths of the herring bone parlour 1710 and within the herring bone parlour 1710. In the arrangement illustrated, the herring bone parlour 1710 comprises two entry paths and a single entry path. The animal recording module 1410 may be located along an exit path of the herring bone parlour 1710 while at least one or more animal identification modules 1440 may be located at the herring bone parlour 1710. In the arrangement 1700b shown in Figure 18b, the herring bone parlour 1710 comprises two entry paths and two exit paths, where the exit paths are located opposite one another. The herring bone parlour 1710 comprises at least two animal recording modules 1410, with at least one located along one of the exit paths and at least one other located along the other exit path of the herring bone parlour 1710. As least one or more animal identification modules 1440 may be located at the herring bone parlour 1710. In the arrangement 1700c shown in Figure 18c, the herring bone parlour 1710 comprises two entry paths and two exit paths, where the exit paths at located opposite one another. The herring bone parlour 1710 comprises at least two animal recording modules 1410, with at least one located at or near the herring bone parlour 1710 at one of the entry paths and at least one other located at or near the herring bone parlour 1710 at the other entry path. As least one or more animal identification modules 1440 may be located at the herring bone parlour 1710.

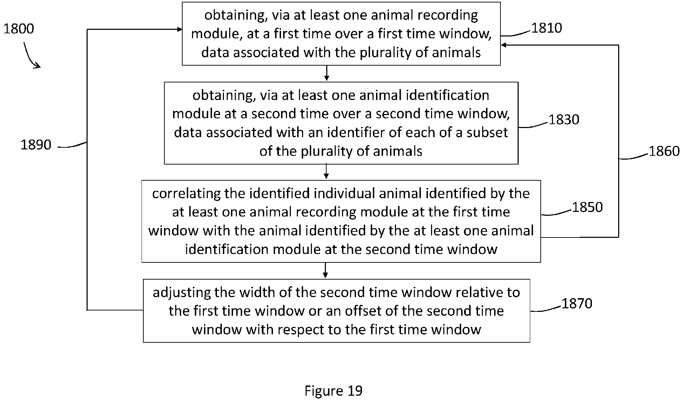

A method of 1800 performed by a system shown in Figures 14 to 18 for determining an identity of an animal from a plurality of animals is shown in Figure 19.

The method comprises at step 1810 obtaining, via at least one animal recording module 1410 at a first time over a first time window, data associated with the plurality of animals 1405_1 - 1405_6, the data associated with the plurality of animals comprising a video from a two-dimensional imaging sensor. For example, an animal may be detected at an animal recording module, such as a camera, at 1pm. The time window may be initially set to a range of +/- the camera time, for example, -300 seconds to +300 seconds from 1pm. The obtained data associated with the plurality of animals may be saved in a database or server and the like for further processing and/or analysis.

At step 1830, the method comprises obtaining, via at least one animal identification module 1440 at a second time over a second time window, data associated with an identifier of each of a subset of the plurality of animals 1405_1 - 1405_6. For example, animal(s) may be detected at an animal identification module, such as an RFID reader, at 1.05pm. The time window may be initially set to a range of +/- the camera time, for example, -300 seconds to +300 seconds from 1pm. The obtained data associated with the identifier of each of the subset of the plurality of animals may be saved in a database or server and the like for further processing and/or analysis.

The at least one animal recording module 1410 may be located at a first location and the at least one animal identification module 1440 may be located at a second location, wherein the first location is spaced apart from the second location.

The at least one animal identification module 1440 has a range of detection 1445 and the two-dimensional imaging sensor has a field of view 1415 such that the range of detection and the field of view are not coincident.

The at least one animal recording module 1410 is configured to identify individual animals within the first time window and associate the individual animals with a time stamp corresponding to a point of detection for that animal.

The at least one animal identification module 1440 is configured to identify individual animals within the second time window and associate the individual animals with a time stamp corresponding to a point of detection for that animal.

At step 1850, the method comprises correlating the identified individual animal identified by the at least one animal recording module at the first time window with the animal identified by the at least one animal identification module at the second time window.

At step 1860, the method may be configured to repeat steps 1810, 1830, 1850 until the system has identified the individual animal identified by the at least one animal recording module at the first time window with the animal identified by the at least one animal identification module at the second time window for at least four times. For example, the system may require a history of reads and vectors, is the identification vectors as previously described, before a final assignment of identity. The history of reads and vectors may require at least four occurrences of a particular animal before the system enrols that identified animal.

At step 1870, the method comprises adjusting the width of the second time window relative to the first time window or an offset of the second time window with respect to the first time window. For example, the adjustment may be perform based on the number of matched animals in a current time window compared by the number of matched animal on a time window greater than the current time window for example. In this way, following an enrolment phase, the system operates such that following enrolment any time an animal is seen or identified, an insight for that animal may be provided. This step may be performed after an enrolment of an animal for at least the four instances or occurrences.

At step 1890, the steps 1810, 1830 and 1850 are repeated with the adjusted width or offset of the time window. The steps 1810, 1830 and 1850 may be repeated continuously.

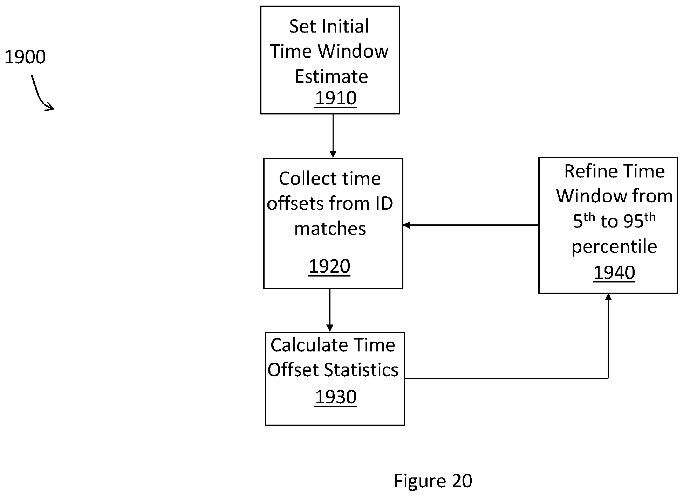

A method 1900 of adjusting or refining the time window shown in Figure 19 is described in the flow chart shown in Figure 20. In this embodiment, at step 1910 an initial time window is set. The initial time window may be based upon individual consideration of the farm setup in question. This may be based upon estimates from a farm manager/owner on how long animals take to travel from the animal identifier module, such as the RFID reader, to the animal recording module, such as the camera, or from the animal recording module, such as the camera, to the animal identifier module, such as the RFID reader. The initial estimate may then be set to +/- a few minutes or seconds interval from that time. If no estimate is available, it may be possible to set the initial time window more broadly to, for example, up to 20 minutes. In further examples, the system may be configured to have a time window of up to 60 or 70 minutes. In this way, the system would address issues with clock changes as a result of day light savings for example that may result in a clock being out of synch by up to 1 hour. It is recommended the system not be used for a time interval with an upper or lower bound of more than 20 minutes. For example, the greater the size of a time window, the greater the number of candidates, or animals, pass by the camera(s) and RFID reader(s). The system may be configured to avoid too much variance in the time offsets that would result in RFID time window being too wide with too many candidates. At step 1920, upon collection of a sufficient number of time offsets from successful ID matches of the animal(s) 1920, at step 1930 a statistical measure of the time offsets is calculated 1930 and at step 1940 a refined time window is set from a 5^{th} to the 95^{th} percentile of the ordered time offsets. For example, a sufficient number of time offsets may be one milking period. Some farms may milk 1000 cows over 10 hours, some may milk 300 cows over 5 hours. The system may be configured to operate during a milking period and adjust the time window after the milking period. Subsequent milking periods may be used to refine the time window.

In further examples to the above arrangement, the following steps may be performed for narrowing a time window. 1) During a farm setup stage, an initial window is set by the system. This initial window may be set manually.
2) For every scan, such as an RFID scan, carried out by the animal identification module, for example RFID reader, the following steps are performed:
   The system detects, tracks and extracts key features about each animal that passes under the animal recording module camera during the initial time window. The detecting, tracking and extracting of the key features may be performed as previously described.
   If a particular RFID information exists within a previously obtained matching database, the system attempts to identify the animal from the set of candidates, or animals, that have passed during the initial time window. For example, the system may uniquely identify the animal. That is, a similarity value or information obtained for that animal may have a cosine similarity above 0.5 threshold. In that case, the system may calculate a time offset for this match such as, for example, the difference in seconds between RFID scan timestamps and the tracked object timestamp.
   The system keeps a log of this offset and any other that it can match during, for example, a milking of the animals.
3) Once the system has attempted to find a unique match for each RFID scan using the initial time window, the following steps are performed by the system:
   The system is configured to determine a new time offset window for the farm setup.
   Using the time offsets from step 2), the system is configured to calculate the 5th and 95th percentile to provide a lower and upper limit to a new time window.
   If the time window has changed, repeat steps 2) and 3).
   This step ensures that the system continually refines the time window that links the RFID scanner's timestamps offset to the tracked object timestamps.
   By narrowing the time window, this reduces the number of candidates that can be considered, which improves enrolment of new animals/candidates and helps identify unique matches.
   The more matches the system obtains or determines, the more time offset examples the system obtains to allow it to gauge a better time window for the system.

The present invention may also be used to build up a history. For example, before the system can confidently assign an identity to an animal which can then be used to adjust the time window, the system may need to have seen a particular animal at least four times. This could be, for example, four times in one day, two times a day over a two day period or one time a day over a four day period. This provides the system with a base line set of offsets and vectors, such as vectors obtained for an animal as previously described, when the system can align a most frequent occurrence of an RFID read over the four days. For some animals, it may take more than four days. For example, if an animal looks very similar to another animal and they always pass by an animal identification module 1440 and animal recording module 1410 next to each other, it may take the system longer to be able to identify each of these animals.

For example, the system of Figure 15 may be configured to build up a history based on the information that is gathered from the animal recording module 1410 and the animal identification module 1440. This is considered as an enrolment. During, for example the first four days of operation, the system may:
Begin with an initial time window set during an installation setup stage, for example but not limited to on a farm. The initial time window may be manually set by a user.

For every scan at the animal identification module 1440, such as an RFID scan, the system:
detects, tracks and extracts key features about each animal that passes under the animal recording module, such as a camera, during an initial time window. The detecting, tracking and extracting of the key features may be performed as previously described.
If an animal RFID has been seen at least four times in these four days at the animal identification module 1440:
An enrolment for that RFID is performed:
The system takes the current days candidates, candidates being the animals, and compares them to previous batches of candidates. That is, one set of candidates for each time the RFID information has been seen or detected.
Using the features extracted by the system, the system identifies if a particular animal has appeared more frequently than any other, for example at least four times. If the system has identified that a particular animal has appeared more frequently than any other, the system then adds this animal to a matching database and includes information on the number of times it has been seen.
If the system cannot identify a unique animal that appears frequently, the system is configured to skip or ignore the RFID information for that animal and attempt to enrol the animal in a future enrolment phase.
With reference to Figure 10 previously described above, a process 1000 for enrolling an animal was described. With reference to Figures 14 to 20, the present invention processes a group of animals and once the group of animals are processed in a time window, the system collects all the tracked bounding boxes and all the identification, ID, reads from any identification device, that is, at least one animal identification module 1440 and at least one animal recording module 1410 in the area where the system is installed, and then by comparing the collection of reads, the identification vectors and the number of times the identification module has determined that an **ID** for an animal was in the vicinity of the identification module whenever an animal with these identification vectors was under the animal recording module, that is the camera, then the system distils this information down to the most common identification thereby enabling the system to identify the animal. The system is dynamic and self-expanding. For example, even if no set-up data is supplied when animals in a population are monitored, in time the same animal will be scanned again. The system will then recognise the animal from the match of the identification vector with the identification vector formed earlier for the same animal. In due course, all animals can be automatically enrolled in the manner as previously described and identified.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

## Claims

1. A method (1800) performed by a system (1400) for identifying an individual an animal from a plurality of animals (1405), the system (1400) comprising at least one animal recording module (1410) located at a first location and an animal identification module (1440) located at a second location, wherein the first location is spaced apart from the second location, wherein the at least one animal recording module (1410) comprises a two-dimensional imaging sensor, wherein the animal identification module (1440) comprises an electronic receiver for receiving wireless signals, and wherein the animal identification module (1440) has a range of detection (1445) and the two-dimensional imaging sensor has a field of view (1415) such that the range of detection (1445) and the field of view (1415) are not coincident, the method (1800) comprising the following steps:
a) obtaining (1810), via the at least one animal recording module (1410) at a first time over a first time window, data associated with the plurality of animals (1405), the data associated with the plurality of animals (1405) comprising a video from the two-dimensional imaging sensor, wherein the at least one animal recording module (1410) is configured to identify individual animals of the plurality of animals (1405) within the first time window and associate the individual animals of the plurality of animals (1405) with a time stamp corresponding to a point of detection for that animal;
b) obtaining (1830), via the animal identification module (1440) at a second time over a second time window, data associated with an identifier of each of a subset of the plurality of animals (1405), the data associated with an identifier of each of a subset of the plurality of animals (1405) comprising a wireless signal identifying the animal, wherein the at least one animal identification module (1440) is configured to identify individual animals of the subset of the plurality of animals (1405) within the second time window and associate each individual animal of the subset of the plurality of animals (1405) with a time stamp corresponding to a point of detection for that animal;
c) matching (1850) the identified individual animal identified by the at least one animal recording module (1410) at the first time window with the animal identified by the at least one animal identification module (1440) at the second time window;
d) repeating (1860) steps a) to c) until the system (1400) has matched the individual animal identified by the at least one animal recording module (1410) at the first time window with the animal identified by the at least one animal identification module (1440) at the second time window for at least four times; and
e) reducing or increasing (1870) the width of the second time window relative to the first time window and/or an offset of the second time window with respect to the first time window and repeating (1890) steps a) to c) with the reduced or increased width and/or offset of the second time window.

2. The method (1800) of claim 1, wherein upon matching (1850) the individual animal identified at the first time window with the animal identified at the second time window for at least four times, enrolling the identified animal within the system.

3. The method (1800) of any preceding claim, wherein matching (1850) the individual animal identified by the at least one animal recording module with the animal identified by the at least one animal identification module is performed at the first and second time windows.

4. The method (1800) of any preceding claim, wherein the first location is spaced apart from the second location by a distance, *D*, of up to 50 metres, preferably up to 10 metres.

5. The method (1800) of any preceding claim, wherein the width or the offset of the second time window relative to the first time window is up to 20 minutes, preferably up to 5 minutes.

6. The method (1800) of any preceding claim, wherein the first and second time windows are set with an initial time window value, wherein the value is based upon a speed or range of speeds of at least one or more of the animals (1405) moving between the animal identifier module (1440) and the animal recording module (1410).

7. The method (1800) of any preceding claim, wherein the initial time window value is based on user input.

8. The method (1800) of any preceding claim, wherein the two-dimensional imaging sensor is a colour camera.

9. The method (1800) of any preceding claim, wherein the animal identification module comprises a radio frequency identification, RFID, reader.

10. The method (1800) according to claim 1, wherein the data associated with the identifier of each of the subset of the plurality of animals is information received, at the RFID reader, from an RFID device attached to each of the subset of the plurality of animals.

11. A system (1400) for identifying an identity of an animal from a plurality of animals, the system comprising:
an animal detection system comprising:
means for obtaining (1410) a video recording of an animal (1405) moving through a space, the video recording captured by a two-dimensional imaging device (1410) from an overhead angle;
means for obtaining (1440) an identifier of an animal (1405) moving through a space, the identifier detected by an animal identification module (1440) spaced apart from the two-dimensional imaging device (1410);
a user device (140a, 140b, 140c) communicatively coupled to the animal detection system and configured to receive information associated with the identity of the animal (1405),
wherein the animal detection system comprising:
at least one processor configured to perform the method (1800) of any one of claims 1 to 10.

12. A sort gate, rotary parlour or herring bone parlour comprising the system (1400) according to claim 11.

13. An animal farm comprising the system (1400) according to claim 11.

## Patentansprüche

1. Ein Verfahren (1800), das von einem System (1400) zum Identifizieren eines einzelnen Tieres aus einer Vielzahl von Tieren (1405) durchgeführt wird, wobei das System (1400) mindestens ein Tieraufzeichnungsmodul (1410), das sich an einem ersten Ort befindet, und ein Tieridentifikationsmodul (1440), das sich an einem zweiten Ort befindet, beinhaltet, wobei der erste Ort von dem zweiten Ort beabstandet ist, wobei das mindestens eine Tieraufzeichnungsmodul (1410) einen zweidimensionalen Bildgebungssensor beinhaltet, wobei das Tieridentifikationsmodul (1440) einen elektronischen Empfänger zum Empfangen von drahtlosen Signalen beinhaltet, und wobei das Tieridentifikationsmodul (1440) einen Erfassungsbereich (1445) aufweist und der zweidimensionale Bildgebungssensor ein Sichtfeld (1415) aufweist, sodass der Erfassungsbereich (1445) und das Sichtfeld (1415) nicht zusammenfallen, wobei das Verfahren (1800) die folgenden Schritte beinhaltet:
a) Erhalten (1810), über das mindestens eine Tieraufzeichnungsmodul (1410) zu einer ersten Zeit über ein erstes Zeitfenster, von Daten, die mit der Vielzahl von Tieren (1405) assoziiert sind, wobei die mit der Vielzahl von Tieren (1405) assoziierten Daten ein Video von dem zweidimensionalen Bildgebungssensor beinhalten, wobei das mindestens eine Tieraufzeichnungsmodul (1410) konfiguriert ist, um einzelne Tiere der Vielzahl von Tieren (1405) innerhalb des ersten Zeitfensters zu identifizieren und die einzelnen Tiere der Vielzahl von Tieren (1405) mit einem Zeitstempel zu assoziieren, der einem Erfassungspunkt für dieses Tier entspricht;
b) Erhalten (1830), über das Tieridentifikationsmodul (1440), zu einem zweiten Zeitpunkt über ein zweites Zeitfenster, von Daten, die mit einem Identifikator jedes von einer Untergruppe der Vielzahl von Tieren (1405) assoziiert sind, wobei die mit einem Identifikator jedes von einer Untergruppe der Vielzahl von Tieren (1405) assoziierten Daten ein drahtloses Signal beinhalten, welches das Tier identifiziert, wobei das mindestens eine Tieridentifikationsmodul (1440) konfiguriert ist, um einzelne Tiere der Untergruppe der Vielzahl von Tieren (1405) innerhalb des zweiten Zeitfensters zu identifizieren und jedes einzelne Tier der Untergruppe der Vielzahl von Tieren (1405) mit einem Zeitstempel zu assoziieren, der einem Erfassungspunkt für dieses Tier entspricht;
c) Abgleichen (1850) des durch das mindestens eine Tieraufzeichnungsmodul (1410) in dem ersten Zeitfenster identifizierten einzelnen Tieres mit dem durch das mindestens eine Tieridentifikationsmodul (1440) in dem zweiten Zeitfenster identifizierten Tier;
d) Wiederholen (1860) der Schritte a) bis c), bis das System (1400) das einzelne Tier, das durch das mindestens eine Tieraufzeichnungsmodul (1410) in dem ersten Zeitfenster identifiziert wurde, mindestens viermal mit dem Tier abgeglichen hat, das durch das mindestens eine Tieridentifikationsmodul (1440) in dem zweiten Zeitfenster identifiziert wurde; und
e) Verringern oder Vergrößern (1870) der Breite des zweiten Zeitfensters relativ zu dem ersten Zeitfenster und/oder eines Versatzes des zweiten Zeitfensters in Bezug auf das erste Zeitfenster und Wiederholen (1890) der Schritte a) bis c) mit der verringerten oder erhöhten Breite und/oder dem verringerten oder erhöhten Versatz des zweiten Zeitfensters.

2. Verfahren (1800) gemäß Anspruch 1, wobei nach dem mindestens viermaligen Abgleichen (1850) des in dem ersten Zeitfenster identifizierten einzelnen Tieres mit dem in dem zweiten Zeitfenster identifizierten Tier, Aufnehmen des identifizierten Tieres in das System.

3. Verfahren (1800) gemäß einem der vorhergehenden Ansprüche, wobei das Abgleichen (1850) des durch das mindestens eine Tieraufzeichnungsmodul identifizierten einzelnen Tieres mit dem durch das mindestens eine Tieridentifikationsmodul identifizierten Tier in dem ersten und zweiten Zeitfenster durchgeführt wird.

4. Verfahren (1800) gemäß einem der vorhergehenden Ansprüche, wobei der erste Ort von dem zweiten Ort um einen Abstand D von bis zu 50 Metern, vorzugsweise bis zu 10 Metern, beabstandet ist.

5. Verfahren (1800) gemäß einem der vorhergehenden Ansprüche, wobei die Breite oder der Versatz des zweiten Zeitfensters relativ zu dem ersten Zeitfenster bis zu 20 Minuten, vorzugsweise bis zu 5 Minuten beträgt.

6. Verfahren (1800) gemäß einem der vorhergehenden Ansprüche, wobei das erste und das zweite Zeitfenster mit einem anfänglichen Zeitfensterwert festgelegt werden, wobei der Wert auf einer Geschwindigkeit oder einem Geschwindigkeitsbereich von mindestens einem oder mehreren der Tiere (1405) basiert, die sich zwischen dem Tieridentifikatormodul (1440) und dem Tieraufzeichnungsmodul (1410) bewegen.

7. Verfahren (1800) gemäß einem der vorhergehenden Ansprüche, wobei der anfängliche Zeitfensterwert auf einer Benutzereingabe basiert.

8. Verfahren (1800) gemäß einem der vorhergehenden Ansprüche, wobei der zweidimensionale Bildgebungssensor eine Farbkamera ist.

9. Verfahren (1800) gemäß einem der vorhergehenden Ansprüche, wobei das Tieridentifikationsmodul einen Radiofrequenzidentifikationsleser, RFID-Leser, beinhaltet.

10. Verfahren (1800) gemäß Anspruch 1, wobei die Daten, die mit dem Identifikator jedes der Untergruppe der Vielzahl von Tieren assoziiert sind, Informationen sind, die an dem RFID-Leser von einer RFID-Vorrichtung empfangen werden, die an jeweils einem der Untergruppe der Vielzahl von Tieren angebracht ist.

11. Ein System (1400) zum Identifizieren einer Identität eines Tieres aus einer Vielzahl von Tieren, wobei das System Folgendes beinhaltet:
ein Tiererfassungssystem, das Folgendes beinhaltet:
Mittel zum Erhalten (1410) einer Videoaufzeichnung eines sich durch einen Raum bewegenden Tieres (1405), wobei die Videoaufzeichnung von einer zweidimensionalen Bildgebungsvorrichtung (1410) aus einem Überkopfwinkel aufgenommen wird;
Mittel zum Erhalten (1440) eines Identifikators eines sich durch einen Raum bewegenden Tieres (1405), wobei der Identifikator von einem Tieridentifikationsmodul (1440) erfasst wird, das von der zweidimensionalen Bildgebungsvorrichtung (1410) beabstandet ist;
eine Benutzervorrichtung (140a, 140b, 140c), die kommunikativ mit dem Tiererfassungssystem gekoppelt und konfiguriert ist, um Informationen zu empfangen, die mit der Identität des Tieres (1405) assoziiert sind;
wobei das Tiererfassungssystem Folgendes beinhaltet:
mindestens einen Prozessor, der konfiguriert ist, um das Verfahren (1800) gemäß einem der Ansprüche 1 bis 10 durchzuführen.

12. Ein Sortiergatter, eine Rotationsmelkanlage oder eine Fischgrätenmelkanlage, beinhaltend das System (1400) gemäß Anspruch 11.

13. Eine Tierfarm, die das System (1400) gemäß Anspruch 11 beinhaltet.

## Revendications

1. Un procédé (1800) mis en œuvre par un système (1400) pour l'identification d'un animal individuel parmi une pluralité d'animaux (1405), le système (1400) comprenant au moins un module d'enregistrement d'animal (1410) situé au niveau d'un premier emplacement et un module d'identification d'animal (1440) situé au niveau d'un deuxième emplacement, le premier emplacement étant espacé du deuxième emplacement, l'au moins un module d'enregistrement d'animal (1410) comprenant un capteur d'imagerie bidimensionnelle, le module d'identification d'animal (1440) comprenant un récepteur électronique pour la réception de signaux sans fil, et le module d'identification d'animal (1440) ayant une portée de détection (1445) et le capteur d'imagerie bidimensionnelle ayant un champ de vision (1415) de telle sorte que la portée de détection (1445) et le champ de vision (1415) ne sont pas coïncidents, le procédé (1800) comprenant les étapes suivantes :
a) l'obtention (1810), par l'intermédiaire de l'au moins un module d'enregistrement d'animal (1410) à un premier instant pendant une première fenêtre temporelle, de données associées à la pluralité d'animaux (1405), les données associées à la pluralité d'animaux (1405) comprenant une vidéo provenant du capteur d'imagerie bidimensionnelle, l'au moins un module d'enregistrement d'animal (1410) étant configuré pour identifier des animaux individuels de la pluralité d'animaux (1405) dans les limites de la première fenêtre temporelle et pour associer les animaux individuels de la pluralité d'animaux (1405) à une estampille temporelle correspondant à un point de détection pour cet animal ;
b) l'obtention (1830), par l'intermédiaire du module d'identification d'animal (1440) à un deuxième instant pendant une deuxième fenêtre temporelle, de données associées à un identifiant de chaque animal d'un sous-ensemble d'animaux de la pluralité d'animaux (1405), les données associées à un identifiant de chaque animal d'un sous-ensemble d'animaux de la pluralité d'animaux (1405) comprenant un signal sans fil identifiant l'animal, l'au moins un module d'identification d'animal (1440) étant configuré pour identifier des animaux individuels du sous-ensemble d'animaux de la pluralité d'animaux (1405) dans les limites de la deuxième fenêtre temporelle et pour associer chaque animal individuel du sous-ensemble d'animaux de la pluralité d'animaux (1405) à une estampille temporelle correspondant à un point de détection pour cet animal ;
c) la mise en concordance (1850) de l'animal individuel identifié qui a été identifié par l'au moins un module d'enregistrement d'animal (1410) à la première fenêtre temporelle avec l'animal identifié par l'au moins un module d'identification d'animal (1440) à la deuxième fenêtre temporelle ;
d) la répétition (1860) des étapes a) à c) jusqu'à ce que le système (1400) ait mis en concordance l'animal individuel identifié par l'au moins un module d'enregistrement d'animal (1410) à la première fenêtre temporelle avec l'animal identifié par l'au moins un module d'identification d'animal (1440) à la deuxième fenêtre temporelle au moins quatre fois ; et
e) la réduction ou l'augmentation (1870) de la largeur de la deuxième fenêtre temporelle par rapport à la première fenêtre temporelle et/ou d'un décalage de la deuxième fenêtre temporelle par rapport à la première fenêtre temporelle et la répétition (1890) des étapes a) à c) avec la largeur et/ou le décalage réduits ou augmentés de la deuxième fenêtre temporelle.

2. Le procédé (1800) de la revendication 1, dans lequel dès que l'animal individuel identifié à la première fenêtre temporelle a été mis en concordance (1850) avec l'animal identifié à la deuxième fenêtre temporelle au moins quatre fois, l'inscription de l'animal identifié au sein du système.

3. Le procédé (1800) de n'importe quelle revendication précédente, dans lequel la mise en concordance (1850) de l'animal individuel identifié par l'au moins un module d'enregistrement d'animal avec l'animal identifié par l'au moins un module d'identification d'animal est mise en œuvre aux première et deuxième fenêtres temporelles.

4. Le procédé (1800) de n'importe quelle revendication précédente, dans lequel le premier emplacement est espacé du deuxième emplacement d'une distance, D, allant jusqu'à 50 mètres, de préférence jusqu'à 10 mètres.

5. Le procédé (1800) de n'importe quelle revendication précédente, dans lequel la largeur ou le décalage de la deuxième fenêtre temporelle par rapport à la première fenêtre temporelle va jusqu'à 20 minutes, de préférence jusqu'à 5 minutes.

6. Le procédé (1800) de n'importe quelle revendication précédente, dans lequel les première et deuxième fenêtres temporelles sont réglées avec une valeur de fenêtre temporelle initiale, la valeur étant basée sur une vitesse ou une gamme de vitesses d'au moins un ou plusieurs des animaux (1405) se déplaçant entre le module identificateur d'animal (1440) et le module d'enregistrement d'animal (1410).

7. Le procédé (1800) de n'importe quelle revendication précédente, dans lequel la valeur de fenêtre temporelle initiale est basée sur une entrée utilisateur.

8. Le procédé (1800) de n'importe quelle revendication précédente, dans lequel le capteur d'imagerie bidimensionnelle est une caméra couleur.

9. Le procédé (1800) de n'importe quelle revendication précédente, dans lequel le module d'identification d'animal comprend un lecteur d'identification par radiofréquence, RFID.

10. Le procédé (1800) selon la revendication 1, dans lequel les données associées à l'identifiant de chaque animal du sous-ensemble d'animaux de la pluralité d'animaux sont des informations reçues, au niveau du lecteur RFID, en provenance d'un dispositif RFID attaché à chaque animal du sous-ensemble d'animaux de la pluralité d'animaux.

11. Un système (1400) pour l'identification d'une identité d'un animal parmi une pluralité d'animaux, le système comprenant :
un système de détection d'animal comprenant :
un moyen pour l'obtention (1410) d'un enregistrement vidéo d'un animal (1405) se déplaçant à travers un espace, l'enregistrement vidéo étant capturé par un dispositif d'imagerie bidimensionnelle (1410) sous un angle surélevé ;
un moyen pour l'obtention (1440) d'un identifiant d'un animal (1405) se déplaçant à travers un espace, l'identifiant étant détecté par un module d'identification d'animal (1440) espacé du dispositif d'imagerie bidimensionnelle (1410) ;
un dispositif utilisateur (140a, 140b, 140c) couplé, de manière à communiquer, au système de détection d'animal et configuré pour recevoir des informations associées à l'identité de l'animal (1405) ;
dans lequel le système de détection d'animal comprend :
au moins un processeur configuré pour mettre en œuvre le procédé (1800) de l'une quelconque des revendications 1 à 10.

12. Une porte de tri, une salle de traite rotative ou une salle de traite en arête de poisson comprenant le système (1400) selon la revendication 11.

13. Une ferme animalière comprenant le système (1400) selon la revendication 11.
